(19)

Europäisches
Patentamt

European
Patent Office

Office européen
des brevets

(11)  **EP 4 572 457 A1**

(12)  **EUROPEAN PATENT APPLICATION**
published in accordance with Art. 153(4) EPC

(43) Date of publication:
    **18.06.2025  Bulletin 2025/25**

(21) Application number: **22954459.8**

(22) Date of filing: **10.08.2022**

(51) International Patent Classification (IPC):
    *H04W 72/04* (2023.01)

(52) Cooperative Patent Classification (CPC):
    **H04W 72/04**

(86) International application number:
    **PCT/CN2022/111584**

(87) International publication number:
    **WO 2024/031487 (15.02.2024 Gazette 2024/07)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(71) Applicant: **Beijing Xiaomi Mobile Software Co.,
    Ltd.
    Beijing 100085 (CN)**

(72) Inventor: **GAO, Xueyuan
    Beijing 100085 (CN)**

(74) Representative: **Gunzelmann, Rainer
    Wuesthoff & Wuesthoff
    Patentanwälte und Rechtsanwalt PartG mbB
    Schweigerstraße 2
    81541 München (DE)**

(54)  **PRECODING INDICATION METHOD AND APPARATUS**

(57)    The present disclosure relates to the field of communications. Provided are a non-codebook-based PUSCH transmission configuration method and apparatus. The technical solution of the present application mainly involves: a network device sending, to a UE, single DCI that carries TCI beam indication information and transmission configuration information, and the UE performing PUSCH transmission according to the single DCI, wherein the TCI beam indication information is used for indicating beam information used by the UE to perform transmission; when the TCI beam indication information indicates one beam, the transmission configuration information comprises a group of information indicator domains for single-panel single-TRP transmission, and when the TCI beam indicator information indicates two or more beams, the transmission configuration information comprises two or more groups of information indicator domains for multi-panel multi-TRP transmission; and each group of information indicator domains comprises at least one of an SRI domain and a TPMI domain. In the precoding indication method and apparatus in the embodiments of the present disclosure, single DCI carries TCI beam indication information and transmission configuration information, and an information indicator domain comprised in the transmission configuration information in the single DCI can be dynamically applied to single-panel single-TRP transmission and multi-panel multi-TRP transmission, such that switching between a single-TRP mode and a multi-TRP mode can be achieved, thereby making coordinated multi-point transmission more effective, and thus effectively improving the reliability of data transmission and increasing the throughput rate thereof.

sending a single DCI to a UE, in which the single DCI includes TCI beam indication information and transmission configuration information, the TCI beam indication information is configured to indicate beam information used by the UE for transmission. In a case where the TCI beam indication information indicates one beam, the transmission configuration information includes one set of information indication fields for a single-panel and single-TRP transmission, and in a case where the TCI beam indication information indicates two or more beams, the transmission configuration information includes two or more sets of information indication fields for a multi-panel and multi-TRP transmission, each set of information indication fields comprises at least one of an SRI indication field or a TPMI indication field    S201

FIG. 2

EP 4 572 457 A1

## Description

### TECHNICAL FIELD

The present disclosure relates to the field of mobile communication technology, and specifically to a precoding indication method and apparatus.

### BACKGROUND

In a new radio (NR) system, in order to improve cell edge coverage and provide better service quality within a serving cell, multi-point coordinative transmission has become an important technical means. In release-18 (Rel-18), it is desired to achieve simultaneous cooperative transmission towards multiple transmission and reception points (TRPs) through multiple panels to enhance reliability and throughput of transmission, such that a user equipment (UE) is required to have the ability to transmit multiple beams simultaneously. Multi-panel/multi-TRP transmission can be scheduled based on a single physical downlink control channel (PDCCH).

In order to make the multi-point coordinative transmission more useful when scheduling multi-panel/multi-TRP transmission based on a single PDCCH, it is extremely important to implement switching between single-TRP transmission and multi-TRP transmission.

### SUMMARY

The present disclosure provide a precoding indication method and apparatus. With the proposed technical solution, mechanism, method and apparatus, switching between single-TRP and multi-TRP may be achieved to make the multi-point coordinative transmission more effective, thereby effectively improving reliability and throughput of data transmission.

According to a first aspect of the embodiments of the present disclosure, a precoding indication method is provided, performed by a network device, including: sending a single downlink control information (DCI) to a user equipment (UE), in which the single DCI includes transmission configuration indicator (TCI) beam indication information and transmission configuration information, the TCI beam indication information is configured to indicate beam information used by the UE for transmission, in a case where the TCI beam indication information indicates one beam, the transmission configuration information includes a set of information indication fields for a single-panel and single-transmission and reception point (TRP) transmission, and in a case where the TCI beam indication information indicates two or more beams, the transmission configuration information includes two or more sets of information indication fields for a multiple panels (multi-panel) and multiple TRPs (multi-TRP) transmission; each set of information indication fields includes at least one of a sounding reference signal (SRS) resource indicator (SRI) indication field or a transmit precoding matrix indicator (TPMI) indication field.

Optionally, in a case where the transmission configuration information includes two or more TPMI indication fields, the multi-panel and multi-TRP transmission is a codebook-based physical uplink shared channel (PUSCH) transmission, and each TPMI indication field of the two or more TPMI indication fields is configured to indicate a precoding matrix for a PUSCH transmission in an associated beam direction; and in a case where the transmission configuration information comprises two or more SRI indication fields, the multi-panel and multi-TRP transmission is a non-codebook-based PUSCH transmission, and each SRI indication field of the two or more SRI indication fields is configured to indicate one or more SRS resources carrying precoding information in an SRS resource set allocated for the PUSCH transmission in the associated beam direction.

Optionally, each TPMI indication field of the two or more TPMI indication fields indicates a TPMI and a transmission rank indicator (TRI) according to a codebook pre-configuration table, and the codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the corresponding codebook pre-configuration table.

Optionally, the method further comprises obtaining rank indication information, wherein the rank indication information is configured to indicate a TRI used for a PUSCH transmission in each beam direction of the UE; wherein, each TPMI indication field of the two or more TPMI indication fields indicates a TPMI according to a TPMI sub-table, wherein the TPMI sub-table is determined from the codebook pre-configuration table according to the TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction.

Optionally, for a specific TRI, a number of codepoints in the TPMI sub-table is 2^M1, wherein K1 codepoints respectively represent K1 TPMI values corresponding to the specific TRI in the corresponding codebook pre-configuration table, and remaining (2^M1-K1) codepoints are reserved values, where M1 is $\lceil \log2(N1_{max}) \rceil$, and $\lceil \ \rceil$ indicates rounding up.

Optionally, each SRI indication field of the two or more SRI indication fields indicates an SRI and a TRI according to an SRI pre-configuration table, wherein the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a number of available SRI combinations in the SRI pre-configuration table.

Optionally, the method further comprises obtaining rank indication information, wherein the rank indication information is configured to indicate a TRI used for a PUSCH transmission in each beam direction of the UE; wherein, each SRI indication field of the two or more SRI indication fields indicates an SRI according to an SRI sub-table, the SRI sub-table is determined from an SRI pre-configuration table according to the TRI used by the PUSCH transmission in the corresponding beam direction, the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a maximum value $N2_{max}$ of a number of available SRI combinations corresponding to each available TRI in the corresponding SRI pre-configuration table, each available TRI is each integer greater than or equal to 1 and less than or equal to a first value, and the first value is a smaller one of the maximum number of the uplink transmission layers supported by the PUSCH transmission in the corresponding beam direction and the number of the SRS resources in the SRS resource set allocated for the PUSCH transmission in the corresponding beam direction.

Optionally, for a specific TRI, a number of codepoints in the SRI sub-table is 2^M2, wherein K2 codepoints respectively represent K2 SRI values corresponding to the specific TRI in the corresponding SRI pre-configuration table, and remaining (2^M2-K2) codepoints are reserved values, where M2 is $\lceil \log_2(N2_{max}) \rceil$, and $\lceil \ \rceil$ indicates rounding up.

Optionally, the rank indication information is obtained according to any one of a demodulation reference signal (DMRS) field of the single DCI; a reserved codepoint or an extended codepoint of any indication field in the single DCI; a new added indication field in the single DCI; or a number of codewords supported by the single DCI.

Optionally, in a case where the transmission configuration information comprises the two or more sets of information indication fields of the multi-panel and multi-TRP transmission, and the multi-panel and multi-TRP transmission is the non-codebook-based PUSCH transmission, an association between SRI indication fields and SRS resource sets is predefined or indicated by an SRS resource set indication field in the single DCI.

According to a second aspect of the embodiments of the present disclosure, a precoding indication method is provided, performed by a UE, including: receiving a single DCI carrying TCI beam indication information and transmission configuration information sent by a network device, in which the TCI beam indication information is configured to indicate beam information used by the UE for transmission, in a case where the TCI beam indication information indicates one beam, the transmission configuration information includes a set of information indication fields for a single-panel and single-TRP transmission, and in a case where the TCI beam indication information indicates two or more beams, the transmission configuration information includes two or more sets of information indication fields for a multi-panel and multi-TRP transmission, each set of information indication fields includes at least one of an SRI indication field or a TPMI indication field; and performing a PUSCH transmission according to the single DCI.

Optionally, in a case where the transmission configuration information comprises two or more TPMI indication fields, the multi-panel and multi-TRP transmission is a codebook-based PUSCH transmission, and each TPMI indication field of the two or more TPMI indication fields is configured to indicate a precoding matrix for a PUSCH transmission in an associated beam direction; and in a case where the TCI beam indication information indicates two or more beams and the transmission configuration information comprises two or more SRI indication fields, the multi-panel and multi-TRP transmission is a non-codebook-based PUSCH transmission, and each SRI indication field of the two or more SRI indication fields is configured to indicate one or more SRS resources carrying precoding information in an SRS resource set allocated for the PUSCH transmission in the associated beam direction.

Optionally, in a case where the multi-panel and multi-TRP transmission is the codebook-based PUSCH transmission, and performing the PUSCH transmission according to the single DCI comprises: determining a precoding matrix for a PUSCH transmission in each beam direction according to a TPMI and a TRI indicated by each TPMI indication field of the two or more TPMI indication fields and a codebook pre-configuration table, wherein the codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the corresponding codebook pre-configuration table; and performing the codebook-based PUSCH transmission according to the corresponding precoding matrix in each beam direction.

Optionally, in a case where the multi-panel and multi-TRP transmission is the codebook-based PUSCH transmission, and performing the PUSCH transmission according to the single DCI comprises: determining a precoding matrix for a PUSCH transmission in each beam direction according to a TPMI indicated by each TPMI indication field of the two or more TPMI indication fields and a TPMI sub-table, wherein the TPMI sub-table is determined from the codebook pre-configuration table according to the TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction; and performing the codebook-based PUSCH transmission according to the corresponding precoding matrix (TPMI) in each beam direction.

Optionally, for a specific TRI, a number of codepoints in the TPMI sub-table is 2^M1, wherein K1 codepoints respectively represent K1 TPMI values corresponding to the specific TRI in the corresponding codebook pre-configuration table, and remaining (2^M1-K1) codepoints are reserved values, where M1 is $\lceil \log_2(N1_{max}) \rceil$, and $\lceil \ \rceil$ indicates rounding up.

Optionally, in a case where the multi-panel and multi-TRP transmission is the non-codebook-based PUSCH transmission, and performing the PUSCH transmission according to the single DCI comprises: determining an SRS resource for a PUSCH transmission in each beam direction according to an SRI and a TRI indicated by each SRI indication field of the two or more SRI indication fields and an SRI pre-configuration table, wherein the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a number of available SRI combinations in the SRI pre-configuration table; and performing the non-codebook-based PUSCH transmission using precoding information carried by the corresponding SRS resource in each beam direction.

Optionally, in a case where the multi-panel and multi-TRP transmission is the non-codebook-based PUSCH transmission, and performing the PUSCH transmission according to the single DCI comprises: determining an SRS resource for a PUSCH transmission in each beam direction according to an SRI indicated by each SRI indication field of the two or more SRI indication fields and an SRI sub-table, wherein the SRI sub-table is determined from an SRI pre-configuration table according to the TRI used by the PUSCH transmission in the corresponding beam direction, the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a maximum value $N_{max}$ of a number of available SRI combinations corresponding to each available TRI in the corresponding SRI pre-configuration table, each available TRI is each integer greater than or equal to 1 and less than or equal to a first value, and the first value is a smaller one of the maximum number of the uplink transmission layers supported by the PUSCH transmission in the corresponding beam direction and the number of the SRS resources in the SRS resource set allocated for the PUSCH transmission in the corresponding beam direction; and performing the non-codebook-based PUSCH transmission using precoding information carried by the corresponding SRS resource in each beam direction.

Optionally, for a specific TRI, a number of codepoints in the SRI sub-table is 2^M2, wherein K2 codepoints respectively represent K2 SRI values corresponding to the specific TRI in the corresponding SRI pre-configuration table, and remaining (2^M2-K2) codepoints are reserved values, where M2 is $\lceil \log_2(N2_{max}) \rceil$, and $\lceil \ \rceil$ indicates rounding up.

According to a third aspect of the embodiments of the present disclosure, a precoding indication apparatus is provided. The apparatus configured in a network device and includes: a transceiver module, configured to send a single downlink control information (DCI) to a user equipment (UE), wherein the single DCI includes transmission configuration indicator (TCI) beam indication information and transmission configuration information, the TCI beam indication information is configured to indicate beam information used by the UE for transmission, in a case where the TCI beam indication information indicates one beam, the transmission configuration information includes a set of information indication fields for a single-panel and single-transmission and reception point (TRP) transmission, and in a case where the TCI beam indication information indicates two or more beams, the transmission configuration information includes two or more sets of information indication fields for a multiple panels (multi-panel) and multiple TRPs (multi-TRP) transmission; wherein each set of information indication fields includes at least one of a sounding reference signal (SRS) resource indicator (SRI) indication field or a transmit precoding matrix indicator (TPMI) indication field.

According to a fourth aspect of the embodiments of the present disclosure, a precoding indication apparatus is provided. The apparatus is configured in a user equipment (UE) and includes: a transceiver module, configured to receive a single downlink control information (DCI) carrying transmission configuration indicator (TCI) beam indication information and transmission configuration information sent by a network device, the TCI beam indication information is configured to indicate beam information used by the UE for transmission, in a case where the TCI beam indication information indicates one beam, the transmission configuration information comprises a set of information indication fields for a single-panel and single-transmission and reception point (TRP) transmission, and in a case where the TCI beam indication information indicates two or more beams, the transmission configuration information comprises two or more sets of information indication fields for a multiple panels (multi-panel) and multiple TRPs (multi-TRP) transmission, wherein each set of information indication fields comprises at least one of a sounding reference signal (SRS) resource indicator (SRI) indication field or a transmit precoding matrix indicator (TPMI) indication field; and a processing module, configured to perform a physical uplink shared channel (PUSCH) transmission according to the single DCI.

According to a fifth aspect of the embodiments of the present disclosure, a communication device including a transceiver, a memory, and a processor connected to the transceiver and the memory, respectively is provided. The processor is configured to control the transceiver to receive and transmit signals and to perform the method described in the embodiments according to the first aspect or the second aspect by executing computer-executable instructions on the memory.

According to a sixth aspect of the embodiments of the present disclosure, a computer storage medium for storing computer-executable instructions is provided. When the computer-executable are executed by a computer, the method described in the embodiments according to the first aspect or the second aspect is implemented.

With the precoding indication method and apparatus provided in the embodiments of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. When the TCI beam indication information indicates one beam, the transmission configuration information includes a set of information indication fields for a single-panel and single-TRP transmission. When the TCI beam indication information indicates two or more beams, the transmission configuration information includes two or more sets of information indication fields for a multi-panel and multi-TRP transmission, and each set of information indication fields includes at least one of an SRI indication field or a TPMI indication field. According to the precoding indication method and apparatus of the embodiments of the present disclosure, a single DCI carries the TCI beam indication information and the transmission configuration information, and the information indication field included in the transmission configuration information in the single DCI may be dynamically applied to the single-panel and single-TRP transmission and the multi-panel and multi-TRP transmission, so as to enable switching between single TRP and multi-TRP to make multi-point coordinative transmission more effective, thereby effectively improving reliability and throughput of data transmission.

Additional aspects and advantages of the present disclosure will be set forth in part in the following description, and in part will be obvious from the following description, or may be learned by practice of the present disclosure.

## BRIEF DESCRIPTION OF THE DRAWINGS

The above and/or additional aspects and advantages of the present disclosure will become apparent and readily understood from the following description of the embodiments in conjunction with the accompanying drawings, in which:

FIG 1 is a schematic diagram showing multi-TRP related operations based on a single DCI for a downlink transmission according to an embodiment of the present disclosure;
FIG 2 is a flowchart of a precoding indication method according to an embodiment of the present disclosure;
FIG 3 is a flowchart of a precoding indication method according to an embodiment of the present disclosure;
FIG 4 is a flowchart of a precoding indication method according to an embodiment of the present disclosure;
FIG 5 is a flowchart of a precoding indication method according to an embodiment of the present disclosure;
FIG 6 is a flowchart of a precoding indication method according to an embodiment of the present disclosure;
FIG 7 is a flowchart of a precoding indication method according to an embodiment of the present disclosure;
FIG 8 is a flowchart of a precoding indication method according to an embodiment of the present disclosure;
FIG 9 is a flowchart of a precoding indication method according to an embodiment of the present disclosure;

FIG 10 is a flowchart of a precoding indication method according to an embodiment of the present disclosure;

FIG 11 is a flowchart of a precoding indication method according to an embodiment of the present disclosure;

FIG 12 is a block diagram of a precoding indication apparatus according to an embodiment of the present disclosure;

FIG 13 is a block diagram of a precoding indication apparatus according to an embodiment of the present disclosure;

FIG 14 is a block diagram of a communication apparatus according to another embodiment of the present disclosure; and

FIG 15 is a block diagram of a chip according to an embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The embodiments described below with reference to the accompanying drawings are exemplary and intended to explain the present disclosure and are not to be construed as limitations of the present disclosure.

In 5G/NR Rel-16, multi-transmission and reception point (TRP) related operations are introduced mainly for a physical downlink shared channel (PDSCH) transmission. Multi-TRP related operations may include single downlink control information (DCI) operations and multi-DCI operations. With a single DCI, a single physical downlink control channel (PDCCH) may be used to schedule multiple PDSCH transmissions from multiple TRPs.

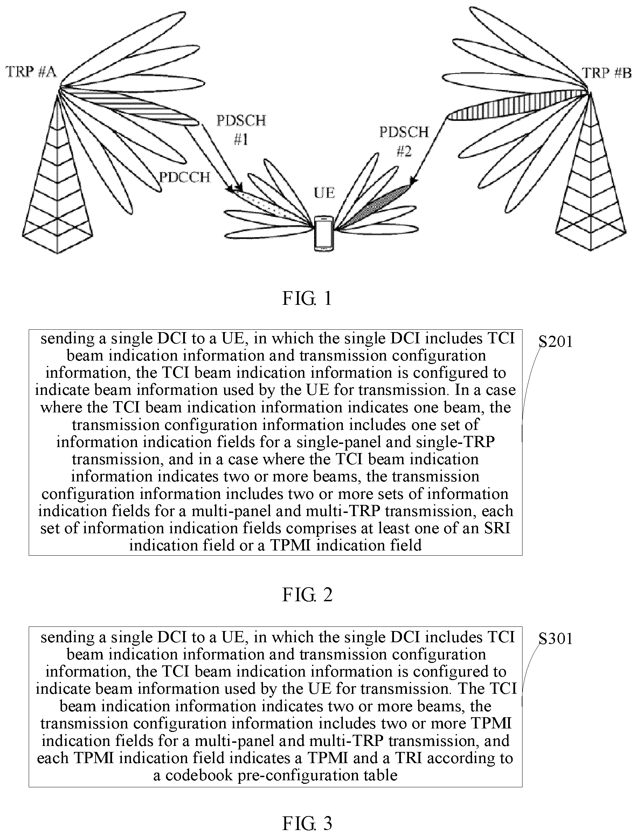

FIG 1 illustrates an exemplary multi-TRP related operations based on a single DCI for a downlink transmission according to an embodiment of the present disclosure. As an example, two TRPs (TRP#A and TRP#B) are provided to communicate with a UE with multiple antenna panels. As shown in FIG 1, for the single DCI operations, a single PDCCH carrying a single DCI from the TRP#A may schedule both a PDSCH transmission (PDSCH#1) from the TRP#A to the UE and a PDSCH transmission (PDSCH #2) from the TRP#B to the UE.

As mentioned above, the multi-TRP related operations may include the single DCI operations and the multi-DCI operations. On the other hand, the multi-TRP related operations may include multi-TRP related operations for downlink (e.g., PDSCH) and multi-TRP related operations for uplink (e.g., PUSCH). In 5G/NR Rel-16, multi-TRP related operations are introduced mainly for the PDSCH transmission, but multi-TRP related operations for the PUSCH transmission are not defined.

In R18, transmission schemes that may be supported for an uplink simultaneous transmission may include an uplink synchronous transmission for multi-panel/TRP/TCI, a cooperative transmission of a transport block (TB) based on a single DCI (S-DCI) PUSCH transmission, including a variety of different transmission schemes. Each transmission scheme is briefly explained below.

One scheme is the space division multiplexing (SDM) scheme: one TB of the PUSCH is transmitted towards two different TRPs on the same time-frequency resource through respective demodulation reference signal (DMRS) ports or port combinations allocated on different panels. Different panels/TRPs/transmission occasions (TOs) are associated with different TCI states, respectively, i.e., associated with different beams. On this basis, the SDM scheme is specifically classified into two schemes: SDM-A and SDM-B. In the SDM-A scheme, different parts of one TB of the PUSCH are transmitted towards two different TRPs on the same time-frequency resource through their corresponding DMRS ports or port combinations allocated on different panels, respectively, and different panels/TRPs/TOs are associated with different TCI states, respectively. In the SDM-B solution, repetitions of the same TB corresponding to different redundancy versions (RVs) of the PUSCH are transmitted towards two different TRPs on the same time-frequency resource through the corresponding DMRS ports or port combinations allocated on different panels, respectively. Different panels/TRPs/TOs are associated with different TCI states, respectively.

One scheme is the frequency division multiplexing (FDM) scheme: one TB of the PUSCH is transmitted towards two different TRPs on the same time domain resource but non-overlapping frequency domain resources through the same DMRS port or port combination allocated on different panels. Different panels/TRPs/TOs are associated with different TCI states, respectively. On this basis, the FDM scheme is specifically classified into two schemes: FDM-A and FDM-B. In the FDM-A scheme, different parts of the same TB of the PUSCH are transmitted towards two different TRPs on the same time domain resource but non-overlapping frequency domain resources through the same DMRS port or port allocated on different panels. Different panels/TRPs/TOs are associated with different TCI states, respectively. In the FDM-B scheme, repetitions of the same TB corresponding to different redundancy versions (RVs) of the PUSCH are transmitted towards two different TRPs on the same time domain resource but non-overlapping frequency domain resources through the same DMRS ports or port combinations allocated on different panels. Different panels/TRPs/ TOs are associated with different TCI states, respectively.

The other scheme is the spatial multiplexing (SFN) scheme: one TB of the PUSCH is transmitted towards two different TRPs on the same time-frequency resource through the same DMRS port or port combination allocated on different panels. Different panels/TRPs/TOs are associated with different TCI states, respectively.

The uplink PUSCH simultaneous transmission based on multiple panels usually supports one or more of the above schemes.

In order to make the multi-point coordinative transmission more useful when scheduling a multi-panel/multi-TRP transmission based on a single PDCCH, it is desired important to implement switching between a single-TRP transmission and a multi-TRP transmission.

In the present disclosure, a technical solution is provided that can implement switching between a single TRP and multiple TRPs to make the multi-point coordinative transmission more effective, thereby effectively improving reliability and throughput of data transmission.

A precoding indication method and apparatus provided by the embodiments of the present disclosure will be described in detail below with reference to the accompanying drawings.

FIG 2 is a flowchart of a precoding indication method according to an embodiment of the present disclosure. As illustrated in FIG 2, the method is performed by a network device, and the method may include the following steps.

At step S201, a single DCI is sent to a UE. The single DCI includes TCI beam indication information and transmission configuration information, the TCI beam indication information is configured to indicate beam information used by the UE for transmission. In a case where the TCI beam indication information indicates one beam, the transmission configuration information includes one set of information indication fields for a single-panel and single-TRP transmission, and in a case where the TCI beam indication information indicates two or more beams, the transmission configuration information includes two or more sets of information indication fields for a multi-panel and multi-TRP transmission. Each set of information indication fields includes at least one of a sounding reference signal (SRS) resource indicator (SRI) indication field or a transmit precoding matrix indicator (TPMI) indication field.

In the embodiments of the present disclosure, in addition to including the TCI beam indication information and the transmission configuration information in the single DCI, the transmission configuration information may dynamically include one set of information indication fields or two or more sets of information indication fields according to whether the TCI beam indication information indicates one beam or two or more beams. When the transmission configuration information includes one set of information indication fields, the DCI may be used for the single-panel and single-TRP transmission, and when the transmission configuration information includes two or more sets of information indication fields, the DCI may be used for the multi-panel and multi-TRP transmission. Each set of information indication fields may be at least one of the SRI indication field or the TPMI indication field, but the application is not limited thereto. Each set of information indication fields may also include other information indication fields in addition to the SRI indication field and the TPMI indication field.

In some embodiments, if the TCI beam indication information in the single DCI indicates one beam and the transmission configuration information may include one TPMI indication field, and the TPMI indication field is used to indicate the precoding matrix of a PUSCH transmission in the beam direction, then the single DCI is used for the single-panel and single-TRP transmission, and the single-panel and single-TRP transmission is a codebook-based PUSCH transmission.

In some embodiments, if the TCI beam indication information in the single DCI indicates two or more beams and the transmission configuration information may include two or more TPMI indication fields, and each TPMI indication field is used to indicate the precoding matrix of a PUSCH transmission in a corresponding beam direction, then the single DCI is used for the multi-panel and multi-TRP transmission, and the multi-panel and multi-TRP transmission is a codebook-based PUSCH transmission. For the PUSCH transmission in each beam direction, one TPMI indication field indicates the precoding matrix used in the PUSCH transmission.

In some embodiments, if the TCI beam indication information in the single DCI indicates one beam and the transmission configuration information may include one SRI indication field, and the SRI indication field is used to indicate one or more SRS resources carrying precoding information in an SRS resource set allocated for a PUSCH transmission in the beam direction, then the single DCI is used for the single-panel and single-TRP transmission, and the single-panel and single-TRP transmission is a non-codebook-based PUSCH transmission.

In some embodiments, if the TCI beam indication information in the single DCI indicates two or more beams and the transmission configuration information may include two or more SRI indication fields, and each SRI indication field is used to indicate one or more SRS resources carrying precoding information in an SRS resource set allocated for a PUSCH transmission in a corresponding beam direction, then the single DCI is used for the multi-panel and multi-TRP transmission, and the multi-panel and multi-TRP transmission is a non-codebook-based PUSCH transmission. For the PUSCH transmission in each beam direction, one SRI indication field indicates the one or more SRS resources selected from the SRS resource set allocated for the PUSCH transmission. For the codebook-based PUSCH transmission, a corresponding spatial filter is selected for the PUSCH transmission through the SRI indication, that is, the PUSCH uses spatial relation information (TCI or Spatial Relation Info) corresponding to the SRS resource selected by the SRI as a sending spatial filter. For the non-codebook-based PUSCH transmission, PUSCH precoding information calculated and recommended by the terminal is carried in multiple single-port SRS resources in an SRS resource set. Each SRS resource carries precoding information used by the corresponding layer of data. The base station performs scheduling selection on the precoding information reported by the terminal by measuring and selects the precoding information through the SRI indication, that is, selecting one or more SRS resources from the corresponding SRS resource set. After receiving the SRI indication from the base station, the terminal uses the precoding information corresponding to the one or more SRS resources as the precoding information used for the PUSCH transmission.

With the precoding indication method provided in this embodiment of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. When the TCI beam indication information indicates one beam, the transmission configuration information includes one set of information indication fields for the single-panel and single-TRP transmission. When the TCI beam indication information indicates two or more beams, the transmission configuration information includes two or more sets of information indication fields for the multi-panel and multi-TRP transmission, and each set of information indication fields includes at least one of an SRI indication field or a TPMI indication field. The information indication field included in the transmission configuration information in the single DCI may be dynamically applied to the single-panel and single-TRP transmission and the multi-panel and multi-TRP transmission, so as to enable switching between single TRP and multi-TRP to make multi-point coordinative transmission more effective, thereby effectively improving reliability and throughput of data transmission.

FIG 3 is a flowchart of a precoding indication method according to an embodiment of the present disclosure. As illustrated in FIG 3, the method is performed by a network device, and the method may include the following steps.

At step S301, a single DCI is sent to a UE. The single DCI includes TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI and a TRI according to a codebook pre-configuration table.

The codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the codebook pre-configuration table.

In some embodiments, if the TCI beam indication information in the single DCI sent by the network device to the UE indicates two or more beams and the transmission configuration information includes two or more TPMI indication fields, then the single DCI is used for the multi-panel and multi-TRP transmission, and the multi-panel and multi-TRP transmission is a codebook-based PUSCH transmission. The codebook-based PUSCH transmission in each beam direction corresponds to one TPMI indication field, that is, one TPMI indication field may indicate a precoding matrix of the codebook-based PUSCH transmission in one beam direction. The network device may determine the codebook parameter configuration and the codebook subset restriction for the PUSCH transmission in each beam direction, so as to determine the codebook pre-configuration table for the PUSCH transmission in each beam direction. Each TPMI indication field included in the transmission configuration information carried in the DCI sent by the network device to the UE may carry an index, and the index is used to indicate both the TPMI and the TRI according to the codebook pre-configuration table. The number of bits occupied by each TPMI indication field is determined according to the number of available TPMI combinations in the corresponding codebook pre-configuration table.

The codebook parameter configuration may be used to configure the number of antenna ports, whether to use transform precoding, and maxRank. The codebook subset restriction includes three types, namely: full and partial and non-coherent; partial and non-coherent; and non-coherent.

For example, for the PUSCH transmission associated with a panel/TRP/PUSCH TO/TCI beam direction/, when the network device determines that one set of codebook parameter configurations for the PUSCH transmission in the beam direction includes: 4 antenna ports, not using transform precoding (DFT-s-OFDM), maxRank=2 or 3 or 4 (i.e., for 4 antenna ports, if transform precoder is disabled, maxRank=2 or 3 or 4), and the codebook subset restriction of the PUSCH transmission in the beam direction indicates the partial and non-coherent, the network device may determine that the codebook pre-configuration table for the PUSCH transmission in the beam direction is the table corresponding to the boldface font in Table 1 below. The TPMI indication field used to indicate the precoding matrix for the PUSCH transmission in the beam direction may indicate the TPMI and the TRI according to this table. For example, if the TPMI indication field carries index 1, it indicates TRI=1 and TPMI=1; and if the TPMI indication field carries index 11, it indicates TRI=4 and TPMI=0. In this table, the number of available TPMI combinations is 32, then the number of bits occupied by the TPMI indication field may be determined as $\lceil \log_2 32 \rceil = 5$, where $\lceil \ \rceil$ indicates rounding up.

Table 1

| index | codebookSubset = fullyAndPartialAndNonCoherent | index | codebookSubset = partialAndNonCoherent | index | codebookSubset= nonCoherent |
|---|---|---|---|---|---|
| 0 | 1 layer: TPMI=0 | 0 | **1 layer: TPMI=0** | 0 | 1 layer: TPMI=0 |
| 1 | 1 layer: TPMI=1 | 1 | **1 layer: TPMI=1** | 1 | 1 layer: TPMI=1 |
| ... | ... | ... | **...** | ... | ... |
| 3 | 1 layer: TPMI=3 | 3 | **1 layer: TPMI=3** | 3 | 1 layer: TPMI=3 |
| 4 | 2 layers: TPMI=0 | 4 | **2 layers: TPMI=0** | 4 | 2 layers: TPMI=0 |
| ... | ... | ... | ... | ... | ... |
| 9 | 2 layers: TPMI=5 | 9 | **2 layers: TPMI=5** | 9 | 2 layers: TPMI=5 |
| 10 | 3 layers: TPMI=0 | 10 | **3 layers: TPMI=0** | 10 | 3 layers: TPMI=0 |
| 11 | 4 layers: TPMI=0 | 11 | **4 layers: TPMI=0** | 11 | 4 layers: TPMI=0 |
| 12 | 1 layer: TPMI=4 | 12 | **1 layer: TPMI=4** | 12-15 | reserved |
| ... | ... | ... | ... | | |
| 19 | 1 layer: TPMI=11 | 19 | **1 layer: TPMI=11** | | |
| 20 | 2 layers: TPMI=6 | 20 | **2 layers: TPMI=6** | | |
| ... | ... | ... | ... | | |
| 27 | 2 layers: TPMI=13 | 27 | **2 layers: TPMI=13** | | |
| 28 | 3 layers: TPMI=1 | 28 | **3 layers: TPMI=1** | | |
| 29 | 3 layers: TPMI=2 | 29 | **3 layers: TPMI=2** | | |
| 30 | 4 layers: TPMI=1 | 30 | **4 layers: TPMI=1** | | |
| 31 | 4 layers: TPMI=2 | 31 | **4 layers: TPMI=2** | | |
| 32 | 1 layers: TPMI=12 | | | | |
| ... | ... | | | | |
| 47 | 1 layers: TPMI=27 | | | | |
| 48 | 2 layers: TPMI=14 | | | | |
| ... | ... | | | | |
| 55 | 2 layers: TPMI=21 | | | | |
| 56 | 3 layers: TPMI=3 | | | | |
| ... | ... | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

For example, for the PUSCH transmission in another beam direction, when the network device determines that the codebook parameter configuration for the PUSCH transmission in the beam direction includes: 4 antenna ports, not using transform precoding, maxRank=2 (i.e., for 4 antenna ports, if transform precoder is disabled, maxRank=2), and the codebook subset restriction of the PUSCH transmission in the beam direction indicates the non-coherent, the network device may determine that the codebook pre-configuration table for the PUSCH transmission in the beam direction is the table corresponding to the boldface font in Table 2 below. The TPMI indication field used to indicate the precoding matrix for the PUSCH transmission in the beam direction may indicate the TPMI and the TRI according to this table. For example, if the TPMI indication field carries index 1, it indicates TRI=1 and TPMI=1; and if the TPMI indication field carries index 11, it indicates TRI=2 and TPMI=6. In this table, the number of available TPMI combinations is 12, then the number of bits occupied by the TPMI indication field may be determined as $\lceil \log_2 12 \rceil = 4$ , where $\lceil \ \rceil$ indicates rounding up.

Table 2

| index | codebookSubset = partialAndNonCoherent | index | codebookSubset= nonCoherent |
|---|---|---|---|
| 0 | 1 layer: TPMI=0 | **0** | **1 layer: TPMI=0** |
| 1 | 1 layer: TPMI=1 | **1** | **1 layer: TPMI=1** |
| ... | ... | **...** | **...** |
| 3 | 1 layer: TPMI=3 | **3** | **1 layer: TPMI=3** |
| 4 | 2 layers: TPMI=0 | **4** | **2 layers: TPMI=0** |
| ... | ... | ... | ... |
| 9 | 2 layers: TPMI=5 | **9** | **2 layers: TPMI=5** |
| 10 | 1 layer: TPMI=13 | **10** | **1 layer: TPMI=13** |
| 11 | 2 layer: TPMI=6 | **11** | 2 layer: TPMI=6 |
| 12 | 1 layer: TPMI=4 | **12-15** | **reserved** |
| ... | ... | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| ... | ... | | |
| 29 | 2 layers: TPMI=13 | | |
| 30-31 | reserved | | |

With the precoding indication method provided in this embodiment of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more TPMI indication fields, and each TPMI indication field indicates both the TPMI and the TRI. In this way, the single DCI may be applied to the codebook-based multi-panel and multi-TRP transmission, so as to make multi-point coordinative transmission more effective, thereby effectively improving reliability and throughput of data transmission.

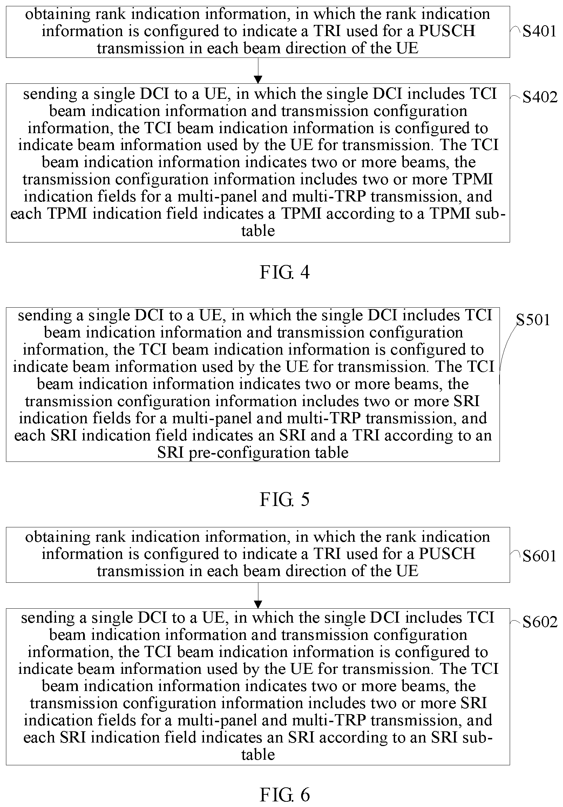

FIG 4 is a flowchart of a precoding indication method according to an embodiment of the present disclosure. As illustrated in FIG 4, the method is performed by a network device, and the method may include the following steps.

At step S401, rank indication information is obtained, in which the rank indication information is configured to indicate a TRI used for a PUSCH transmission in each beam direction of the UE.

In some embodiments, the rank indication information is obtained according to any of the following: a demodulation reference signal (DMRS) field of a single DCI; a reserved codepoint or an extended codepoint of any indication field of the single DCI; a new added indication field of the single DCI, or the number of codewords supported by the single DCI.

The DMRS field of the DCI may indicate DMRS port information used for a PUSCH transmission in each beam direction. For example, if the indicated DMRS ports are {0,1} and the corresponding transmission scheme is FDM or SFN transmission, then the DMRS ports corresponding to the PUSCH transmission in each beam direction use ports {0,1}, that is, TRI is 2. For example, when the corresponding indicated DMRS ports are {0,1} and the corresponding transmission scheme is SDM transmission, the DMRS ports corresponding to the PUSCH transmission in each TCI beam direction may be determined according to a predefined rule. The possible port allocation is that the PUSCH transmission in a first beam direction uses DMRS port {0}, and the corresponding TRI is 1, and the PUSCH transmission in a second beam direction uses DMRS port {1}, and the corresponding TRI is 1.

At step S402, a single DCI is sent to a UE. The single DCI includes TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI according to a TPMI sub-table.

The TPMI sub-table is determined from a codebook pre-configuration table according to a TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction.

In the embodiments, if the TCI beam indication information in the single DCI sent by the network device to the UE indicates two or more beams and the transmission configuration information includes two or more TPMI indication fields, then the single DCI is used for the multi-panel and multi-TRP transmission, and the multi-panel and multi-TRP transmission is a codebook-based PUSCH transmission. The codebook-based PUSCH transmission in each beam direction corresponds to one TPMI indication field, that is, one TPMI indication field may indicate a precoding matrix of the codebook-based PUSCH transmission in one beam direction. The network device may determine the codebook parameter configuration and the codebook subset restriction for the PUSCH transmission in each beam direction and thus determine the codebook pre-configuration table for the PUSCH transmission in each beam direction, and the network device may obtain the TRI used for the PUSCH transmission in each beam direction and thus determine the TPMI sub-table from the determined codebook pre-configuration table. Each TPMI indication field included in the transmission configuration information carried in the DCI sent by the network device to the UE may carry an index, and the index is used to indicate the TPMI according to the TPMI sub-table. The number of bits occupied by each TPMI indication field is determined according to the maximum value of the number of available TPMI combinations corresponding to each available TRI in the corresponding codebook pre-configuration table.

The codebook parameter configuration may be used to configure the number of antenna ports, whether to use transform precoding, and maxRank. The codebook subset restriction includes three types, namely: full and partial and non-coherent; partial and non-coherent; and non-coherent.

In an example, for the PUSCH transmission associated with a panel/TRP/PUSCH TO/TCI beam direction, when the network device determines that the codebook parameter configuration for the PUSCH transmission in the beam direction includes: 4 antenna ports, not using transform precoding, maxRank=2 or 3 or 4 (i.e., for 4 antenna ports, if transform precoder is disabled, maxRank=2 or 3 or 4), and the codebook subset restriction of the PUSCH transmission in the beam direction indicates the partial and non-coherent, the network device may determine that the codebook pre-configuration table for the PUSCH transmission in the beam direction is the table corresponding to the boldface font in Table 1 above. Further, the network device obtains the value of the TRI for the PUSCH transmission in the beam direction, and the network device may determine the corresponding TPMI sub-table as a subset corresponding to the TRI of the value in this table. For example, if TRI=3 is obtained, the network device may determine the corresponding TPMI sub-table as a subset corresponding to TRI=3 (3 layers) in this table, and indexes in the TPMI sub-table are reordered, as shown in Table 3. For another example, if TRI=2 is obtained, the network device may determine the corresponding TPMI sub-table as a subset corresponding to TRI=2 (2 layers) in this table, and indexes in the TPMI sub-table are reordered, as shown in Table 4. The TPMI indication field used to indicate the precoding matrix for the PUSCH transmission in the beam direction may indicate the TPMI according to the TPMI sub-table. For example, in Table 3 determined according to TRI=3, if the TPMI indication field carries index 1, it indicates TPMI =1; and if the TPMI indication field carries index 2, it indicates TPMI=2.

In the determined codebook pre-configuration table, the available TRIs include 1, 2, 3 and 4. When TRI=1, the number of available TPMI combinations is 12; when TRI=2, the number of available TPMI combinations is 14; when TRI=3, the number of available TPMI combinations is 3; when TRI=4, the number of available TPMI combinations is 3; then the number of bits occupied by the TPMI indication field may be determined as $\lceil \log_2 14 \rceil = 4$, where $\lceil \ \rceil$ indicates rounding up.

Table 3

| index | codebookSubset = partialAndNonCoherent |
|-------|----------------------------------------|
| 0 | 3 layers: TPMI=0 |
| 1 | 3 layers: TPMI=1 |
| 2 | 3 layers: TPMI=2 |
| 3-15 | reserved |

Table 4

| index | codebookSubset = partialAndNonCoherent |
|---|---|
| 0 | 2 layers: TPMI=0 |
| 1 | 2 layers: TPMI=1 |
| 2 | 2layers: TPMI=2 |
| 3 | 2layers: TPMI=3 |
| 4 | 2layers: TPMI=4 |
| 5 | 2layers: TPMI=5 |
| 6 | 2layers: TPMI=6 |
| 7 | 2layers: TPMI=7 |
| 8 | 2layers: TPMI=8 |
| 9 | 2layers: TPMI=9 |
| 10 | 2layers: TPMI=10 |
| 11 | 2layers: TPMI=11 |
| 12 | 2layers: TPMI=12 |
| 13 | 2layers: TPMI=13 |
| 14-15 | reserved |

As shown above, although the available TPMI combinations in the TPMI sub-table determined according to TRI=3 includes three possibilities, i.e., 0, 1 and 2, the number of the codepoints of the TPMI sub-table is determined according to the maximum value of the number of the available TPMI combinations corresponding to each available TRI in the codebook pre-configuration table, i.e., it is determined according to the number 14 of the available TPMI combinations corresponding to TRI=2, so the number of the codepoints of the TPMI sub-table is 16.

In some embodiments, for a specific TRI, the number of codepoints in the TPMI sub-table is 2^M1, in which K1 codepoints respectively represent K1 TPMI values corresponding to the specific TRI in the corresponding codebook pre-configuration table, and remaining (2^M1-K1) codepoints are reserved values, where M1 is $\lceil \log 2(N1_{max}) \rceil$, and $\lceil \rceil$ indicates rounding up.

For example, for TRI=3, 3 codepoints respectively represent the TPMI values corresponding to TRI=3 in the corresponding codebook pre-configuration table, and the remaining 13 chokepoints are reserved, as shown in Table 3 above.

For TRI=2, 14 codepoints respectively represent the TPMI values corresponding to TRI=2 in the corresponding codebook pre-configuration table, and the remaining 2 chokepoints are reserved, as shown in Table 4 above.

In another example, for the PUSCH transmission in one beam direction, when the network device determines that the codebook parameter configuration for the PUSCH transmission in the beam direction includes: 4 antenna ports, not using transform precoding, maxRank=2 (i.e., for 4 antenna ports, if transform precoder is disabled, maxRank=2), and the codebook subset restriction of the PUSCH transmission in the beam direction indicates the non-coherent, the network device may determine that the codebook pre-configuration table for the PUSCH transmission in the beam direction is the table corresponding to the boldface font in Table 2 above. Further, the network device obtains the value of the TRI for the PUSCH transmission in the beam direction, and the network device may determine the corresponding TPMI sub-table as a subset corresponding to the TRI of the value in this table. For example, if TRI=1 is obtained, the network device may determine the corresponding TPMI sub-table as a subset corresponding to TRI=1 (1 layer) in this table, and indexes in the TPMI sub-table are reordered, as shown in Table 5. For another example, if TRI=2 is obtained, the network device may determine the corresponding TPMI sub-table as a subset corresponding to TRI=2 (2 layers) in this table, and indexes in the TPMI sub-table are reordered, as shown in Table 6. The TPMI indication field used to indicate the precoding matrix for the PUSCH transmission in the beam direction may indicate the TPMI according to the TPMI sub-table. For example, in Table 5 determined according to TRI=1, if the TPMI indication field carries index 1, it indicates TPMI =1; and if the TPMI indication field carries index 2, it indicates TPMI=2.

In the determined codebook pre-configuration table, the available TRIs include 1, 2. When TRI=1, the number of available TPMI combinations is 5; when TRI=2, the number of available TPMI combinations is 7; then the number of bits occupied by the TPMI indication field may be determined as $\lceil \log_2 7 \rceil$=3, where $\lceil \rceil$ indicates rounding up.

Table 5

| index | codebookSubset= NonCoherent |
|-------|------------------------------|
| 0 | 1 layers: TPMI=0 |
| 1 | 1 layers: TPMI=1 |
| 2 | 1 layers: TPMI=2 |
| 3 | 1 layers: TPMI=3 |
| 4 | 1 layers: TPMI=13 |
| 5-7 | reserved |

Table 6

| index | codebookSubset = NonCoherent |
|-------|------------------------------|
| 0 | 2 layers: TPMI=0 |
| 1 | 2 layers: TPMI=1 |
| 2 | 2layers: TPMI=2 |
| 3 | 2layers: TPMI=3 |
| 4 | 2layers: TPMI=4 |
| 5 | 2layers: TPMI=5 |
| 6 | 2layers: TPMI=6 |
| 7 | reserved |

As shown above, although the available TPMI combinations in the TPMI sub-table determined according to TRI=1 includes five possibilities, i.e., 0, 1, 2, 3 and 13, the number of the codepoints of the TPMI sub-table is determined according to the maximum value of the number of the available TPMI combinations corresponding to each available TRI in the codebook pre-configuration table, i.e., it is determined according to the number 7 of the available TPMI combinations corresponding to TRI=2, so the number of the codepoints of the TPMI sub-table is 8.

For TRI=1, 5 codepoints respectively represent the TPMI values corresponding to TRI=1 in the corresponding codebook pre-configuration table, and the remaining 3 chokepoints are reserved, as shown in Table 5 above.

For TRI=2, 7 codepoints respectively represent the TPMI values corresponding to TRI=2 in the corresponding codebook pre-configuration table, and the remaining 1 chokepoint is reserved, as shown in Table 6 above.

With the precoding indication method provided in this embodiment of the present disclosure, the network device obtains the TRI used for the PUSCH transmission in each beam direction of the UE, and sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more TPMI indication fields, and each TPMI indication field indicates merely the TPMI. In this way, the single DCI may be applied to the codebook-based multi-panel and multi-TRP transmission, so as to make multi-point coordinative transmission more effective, thereby effectively improving reliability and throughput of data transmission.

FIG 5 is a flowchart of a precoding indication method according to an embodiment of the present disclosure. As illustrated in FIG 5, the method is performed by a network device, and the method may include the following steps.

At step S501, a single DCI is sent to a UE. The single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI and a TRI according to an SRI pre-configuration table.

The SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a number of available SRI combinations in the SRI pre-configuration table.

In some embodiments, if the TCI beam indication information in the single DCI sent by the network device to the UE indicates two or more beams and the transmission configuration information includes two or more SRI indication fields, then the single DCI is used for the multi-panel and multi-TRP transmission, and the multi-panel and multi-TRP transmission is a non-codebook-based PUSCH transmission. The non-codebook-based PUSCH transmission in each beam direction corresponds to one SRI indication field, that is, one SRI indication field may indicate an SRS resource of the non-codebook-based PUSCH transmission in one beam direction. The network device may determine the maximum number of the uplink transmission layers supported by the PUSCH transmission in each beam direction and the number of SRS resources in an SRS resource set allocated for the PUSCH transmission in each beam direction, and thus determine the SRI pre-configuration table for the PUSCH transmission in each beam direction. Each SRI indication field included in the transmission configuration information carried in the DCI sent by the network device to the UE may carry an index, and the index is used to indicate both the SRI and the TRI according to the SRI pre-configuration table. The number of bits occupied by each SRI indication field is determined according to the number of available SRI combinations in the corresponding SRI pre-configuration table.

For example, for the PUSCH transmission associated with a panel/TRP/PUSCH TO/TCI beam direction/, when the network device determines that the maximum number of the uplink transmission layers supported by the PUSCH transmission in the beam direction is 4 ($L_{max}$= 4), and the number of SRS resources in an SRS resource set allocated for the PUSCH transmission in the beam direction is 3 ($N_{SRS}$=3), the network device may determine that the SRI pre-configuration table for the PUSCH transmission in the beam direction is the table corresponding to the boldface font in Table 6 below. The SRI indication field used to indicate the SRS resource for the PUSCH transmission in the beam direction may indicate the SRI and the TRI according to this table (implicitly indicated by the number of SRIs). For example, if the SRI indication field carries index 1, it indicates TRI=1 and SRI=1; and if the SRI indication field carries index 6, it indicates TRI=3 and SRI=0, 1, 2. In this table, the number of available SRI combinations is 7, then the number of bits occupied by the SRI indication field may be determined as $\lceil \log_2 7 \rceil$=3, where $\lceil \ \rceil$ indicates rounding up.

Table 6

| index | SRI(s), $N_{SRS}$ = 2 | index | SRI(s), $N_{SRS}$ =3 | index | SRI(s), $N_{SRS}$ = 4 |
|---|---|---|---|---|---|
| 0 | 0 | **0** | **0** | 0 | 0 |
| 1 | 1 | **1** | **1** | 1 | 1 |
| 2 | 0, 1 | **2** | **2** | 2 | 2 |
| 3 | reserved | **3** | **0,1** | 3 | 3 |
| | | **4** | **0,2** | 4 | 0,1 |
| | | **5** | **1,2** | 5 | 0,2 |
| | | **6** | **0,1,2** | 6 | 0,3 |
| | | **7** | **reserved** | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

For example, for the PUSCH transmission in another beam direction, when the network device determines that the maximum number of the uplink transmission layers supported by the PUSCH transmission in the beam direction is 3 ($L_{max}$= 3), and the number of SRS resources in an SRS resource set allocated for the PUSCH transmission in the beam direction is 4 ($N_{SRS}$=4), the network device may determine that the SRI pre-configuration table for the PUSCH transmission in the beam direction is the table corresponding to the boldface font in Table 7 below. The SRI indication field used to indicate the SRS resource for the PUSCH transmission in the beam direction may indicate the SRI and the TRI according to this table. For example, if the SRI indication field carries index 1, it indicates TRI=1 and SRI=1; and if the SRI indication field carries index 6, it indicates TRI=2 and SRI=1, 2. In this table, the number of available SRI combinations is 14, then the number of bits occupied by the SRI indication field may be determined as $\lceil \log_2 14 \rceil = 4$, where $\lceil \ \rceil$ indicates rounding up.

Table 7

| index | SRI(s), $N_{SRS} = 2$ | index | SRI(s), $N_{SRS} = 3$ | index | SRI(s), $N_{SRS} = 4$ |
|---|---|---|---|---|---|
| 0 | 0 | 0 | 0 | 0 | 0 |
| 1 | 1 | 1 | 1 | 1 | 1 |
| 2 | 0, 1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

In some embodiments, an association between the SRI indication fields and the SRS resource sets may be predefined or indicated by an SRS resource set indication field in the single DCI.

Assume that the TCI beam indication information carried in the single DCI sent by the network device indicates three beams (corresponding to a first beam direction, a second beam direction, and a third beam direction respectively), and the transmission configuration information carried in the single DCI includes three SRI indication fields (a first SRI indication field, a second SRI indication field and a third SRI indication field, respectively). In one example, the network device and the UE may predefine that the first SRI indication field indicates selecting an SRS resource from an SRS resource set allocated for the PUSCH transmission in the first beam direction, that is, the first SRI indication field indicates the SRS resource used for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction. In another example, the network device indicates through an SRS resource set indication field in the single DCI. For example, a new SRS resource set indication field is added to the single DCI. The SRS resource set indication field indicates that the first SRI indication field indicates selecting an SRS resource from an SRS resource set allocated for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction.

With the precoding indication method provided in this embodiment of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more SRI indication fields, and each SRI indication field indicates both the SRI and the TRI. In this way, the single DCI may be applied to the codebook-based multi-panel and multi-TRP transmission, so as to make multi-point coordinative transmission more effective, thereby effectively improving reliability and throughput of data transmission.

FIG 6 is a flowchart of a precoding indication method according to an embodiment of the present disclosure. As illustrated in FIG. 6, the method is performed by a network device, and the method may include the following steps.

At step S601, rank indication information is obtained, in which the rank indication information is configured to indicate a TRI used for a PUSCH transmission in each beam direction of the UE.

In some embodiments, the rank indication information is obtained according to any of the following: a demodulation reference signal (DMRS) field of a single DCI; a reserved codepoint or an extended codepoint of any indication field of the single DCI; a new added indication field of the single DCI, or the number of codewords supported by the single DCI.

The DMRS field of the DCI may indicate DMRS port information used for a PUSCH transmission in each beam direction. For example, if the indicated DMRS ports are {0,1} and the corresponding transmission scheme is FDM or SFN transmission, then the DMRS ports corresponding to the PUSCH transmission in each beam direction use ports {0,1}, that is, TRI is 2. For example, when the corresponding indicated DMRS ports are {0,1} and the corresponding transmission scheme is SDM transmission, the DMRS ports corresponding to the PUSCH transmission in each TCI beam direction may be determined according to a predefined rule. The possible port allocation is that the PUSCH transmission in a first beam direction uses DMRS port {0}, and the corresponding TRI is 1, and the PUSCH transmission in a second beam direction uses DMRS port {1}, and the corresponding TRI is 1.

At step S602, a single DCI is sent to a UE. The single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI according to an SRI sub-table.

The SRI sub-table is determined from a codebook pre-configuration table according to a TRI used for the PUSCH transmission in the corresponding beam direction, and the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a maximum value $N2_{max}$ of a number of available SRI combinations corresponding to each available TRI in the corresponding SRI pre-configuration table, and each available SRI is determined according to a smaller one of the maximum number of the uplink transmission layers supported by the PUSCH transmission in the corresponding beam direction and the number of the SRS resources in the SRS resource set allocated for the PUSCH transmission in the corresponding beam direction.

In the embodiments, if the TCI beam indication information in the single DCI sent by the network device to the UE indicates two or more beams and the transmission configuration information includes two or more SRI indication fields, then the single DCI is used for the multi-panel and multi-TRP transmission, and the multi-panel and multi-TRP transmission is a non-codebook-based PUSCH transmission. The non-codebook-based PUSCH transmission in each beam direction corresponds to one SRI indication field, that is, one SRI indication field may indicate an SRS resource of the non-codebook-based PUSCH transmission in one beam direction. The network device may determine the maximum number of the uplink transmission layers supported by the PUSCH transmission in each beam direction and the number of SRS resources in an SRS resource set allocated for the PUSCH transmission in each beam direction, and thus determine the SRI pre-configuration table for the PUSCH transmission in each beam direction, and the network device may obtain the TRI used for the PUSCH transmission in each beam direction and thus determine the SRI sub-table from the determined SRI pre-configuration table. Each SRI indication field included in the transmission configuration information carried in the DCI sent by the network device to the UE may carry an index, and the index is used to indicate the SRI according to the SRI sub-table. The number of bits occupied by each SRI indication field is determined according to the maximum value of the number of available SRI combinations corresponding to each available TRI in the corresponding SRI pre-configuration table.

In an example, for the PUSCH transmission in one beam direction, when the network device determines that the maximum number of the uplink transmission layers supported by the PUSCH transmission in the beam direction is 4 ($L_{max}$= 4), and the number of SRS resources in an SRS resource set allocated for the PUSCH transmission in the beam direction is 3 ($N_{SRS}$=3), the network device may determine that the SRI pre-configuration table for the PUSCH transmission in the beam direction is the table corresponding to the boldface font in Table 6 above. Further, the network device obtains the value of the TRI for the PUSCH transmission in the beam direction, and the network device may determine the corresponding SRI sub-table as a subset corresponding to the TRI of the value in this table. For example, if TRI=3 is obtained, the network device may determine the corresponding SRI sub-table as a subset corresponding to TRI=3 (3 SRIs) in this table, and indexes in the SRI sub-table are reordered, as shown in Table 8. For another example, if TRI=2 is obtained, the network device may determine the corresponding SRI sub-table as a subset corresponding to TRI=2 (2 SRIs) in this table, and indexes in the SRI sub-table are reordered, as shown in Table 9. The SRI indication field used to indicate the SRS resource for the PUSCH transmission in the beam direction may indicate the SRI according to the SRI sub-table. For example, in Table 9 determined according to TRI=2, if the SRI indication field carries index 1, it indicates SRI=0, 2; and if the SRI indication field carries index 2, it indicates SRI=1, 2.

In the determined SRI pre-configuration table, the available TRI is greater than or equal to 1 and less than or equal to the smaller one of $L_{max}$ or $N_{SRS}$ (in this example, min{$L_{max}$, $N_{SRS}$}=3), i.e., 1, 2, 3. When TRI=1, the number of available SRI combinations is 3; when TRI=2, the number of available SRI combinations is 3; when TRI=3, the number of available SRI combinations is 1; then the number of bits occupied by the TPMI indication field may be determined as $\lceil log_2 3 \rceil = 2$, where $\lceil \ \rceil$ indicates rounding up.

Table 8

| index | SRI(s), $N_{SRS} = 3$ |
|-------|------------------------|
| 0 | 0,1,2 |
| 1-3 | reserved |

Table 9

| index | SRI(s), $N_{SRS} = 3$ |
|-------|------------------------|
| 0 | 0,1 |
| 1 | 0,2 |
| 2 | 1,2 |
| 3 | reserved |

As shown above, although the available SRI combinations in the SRI sub-table determined according to TRI=3 includes one possibility, i.e., {0,1,2}, the number of the codepoints of the SRI sub-table is determined according to the maximum value of the number of the available SRI combinations corresponding to each available TRI in the codebook pre-configuration table, i.e., it is determined according to the number 3 of the available SRI combinations corresponding to TRI=2, so the number of the codepoints of the SRI sub-table is 4.

In some embodiments, for a specific TRI, the number of codepoints in the SRI sub-table is 2^M2, in which K2 codepoints respectively represent K2 SRI values corresponding to the specific TRI in the corresponding SRI pre-configuration table, and remaining (2^M2-K2) codepoints are reserved values, where M2 is $\lceil log2(N2_{max}) \rceil$, and $\lceil \ \rceil$ indicates rounding up.

For example, for TRI=3, 1 codepoint represents the SRI value corresponding to TRI=3 in the corresponding codebook pre-configuration table, and the remaining 3 chokepoints are reserved, as shown in Table 8 above.

For TRI=2, 3 codepoints respectively represent the SRI values corresponding to TRI=2 in the corresponding codebook pre-configuration table, and the remaining 1 chokepoint is reserved, as shown in Table 9 above.

In another example, for the PUSCH transmission in one beam direction, when the network device determines that the maximum number of the uplink transmission layers supported by the PUSCH transmission in the beam direction is 3 ($L_{max}= 3$), and the number of SRS resources in an SRS resource set allocated for the PUSCH transmission in the beam direction is 4 ($N_{SRS}=4$), the network device may determine that the SRI pre-configuration table for the PUSCH transmission in the beam direction is the table corresponding to the boldface font in Table 7 above. Further, the network device obtains the value of the TRI for the PUSCH transmission in the beam direction, and the network device may determine the corresponding SRI sub-table as a subset corresponding to the TRI of the value in this table. For example, if TRI=3 is obtained, the network device may determine the corresponding SRI sub-table as a subset corresponding to TRI=3 (3 SRIs) in this table, and indexes in the SRI sub-table are reordered, as shown in Table 10. For another example, if TRI=2 is obtained, the network device may determine the corresponding SRI sub-table as a subset corresponding to TRI=2 (2 SRIs) in this table, and indexes in the SRI sub-table are reordered, as shown in Table 11. The SRI indication field used to indicate the SRS resource for the PUSCH transmission in the beam direction may indicate the SRI according to the SRI sub-table. For example, in Table 11 determined according to TRI=2, if the SRI indication field carries index 1, it indicates SRI=0, 2; and if the SRI indication field carries index 2, it indicates SRI=1, 2.

In the determined SRI pre-configuration table, the available TRI is greater than or equal to 1 and less than or equal to the smaller one of $L_{max}$ or $N_{SRS}$ (in this example, min{$L_{max}$, $N_{SRS}$}=3), i.e., 1, 2, 3. When TRI=1, the number of available SRI combinations is 3; when TRI=2, the number of available SRI combinations is 6; when TRI=3, the number of available SRI combinations is 4; then the number of bits occupied by the SRI indication field may be determined as $\lceil log_2 6 \rceil = 3$, where $\lceil \ \rceil$ indicates rounding up.

Table 10

| index | SRI(s), $N_{SRS} = 4$ |
|-------|------------------------|
| 0 | 0,1,2 |

(continued)

| index | SRI(s), $N_{SRS} = 4$ |
|---|---|
| 1 | 0,1,3 |
| 2 | 0,2,3 |
| 3 | 1,2,3 |
| 4-7 | reserved |

Table 11

| index | SRI(s), $N_{SRS} = 4$ |
|---|---|
| 0 | 0,1 |
| 1 | 0,2 |
| 2 | 0,3 |
| 3 | 1,2 |
| 4 | 1,3 |
| 5 | 2,3 |
| 6-7 | reserved |

As shown above, although the available SRI combinations in the SRI sub-table determined according to TRI=3 includes four possibilities, i.e., i.e., {0,1,2}, {0,1,3}, {0,2,2}, {1,2,3}, the number of the codepoints of the SRI sub-table is determined according to the maximum value of the number of the available SRI combinations corresponding to each available TRI in the codebook pre-configuration table, i.e., it is determined according to the number 6 of the available SRI combinations corresponding to TRI=2, so the number of the codepoints of the SRI sub-table is 8.

For TRI=3, 4 codepoints respectively represent the SRI values corresponding to TRI=3 in the corresponding codebook pre-configuration table, and the remaining 4 chokepoints are reserved, as shown in Table 10 above.

For TRI=2, 6 codepoints respectively represent the SRI values corresponding to TRI=2 in the corresponding codebook pre-configuration table, and the remaining 2 chokepoints are reserved, as shown in Table 11 above.

In some embodiments, an association between the SRI indication fields and the SRS resource sets may be predefined or indicated by an SRS resource set indication field in the single DCI.

Assume that the TCI beam indication information carried in the single DCI sent by the network device indicates three beams (corresponding to a first beam direction, a second beam direction, and a third beam direction respectively), and the transmission configuration information carried in the single DCI includes three SRI indication fields (a first SRI indication field, a second SRI indication field and a third SRI indication field, respectively). In one example, the network device and the UE may predefine that the first SRI indication field indicates selecting an SRS resource from an SRS resource set allocated for the PUSCH transmission in the first beam direction, that is, the first SRI indication field indicates the SRS resource used for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction. In another example, the network device indicates through an SRS resource set indication field in the single DCI. For example, a new SRS resource set indication field is added to the single DCI. The SRS resource set indication field indicates that the first SRI indication field indicates selecting an SRS resource from an SRS resource set allocated for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction.

With the precoding indication method provided in this embodiment of the present disclosure, the network device obtains the TRI used for the PUSCH transmission in each beam direction of the UE, and sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more SRI indication fields, and each SRI indication field indicates merely the SRI. In this way, the single DCI may be applied to the codebook-based multi-panel and multi-TRP transmission, so as to make multi-point coordinative transmission more effective, thereby effectively improving reliability and throughput of data transmission.

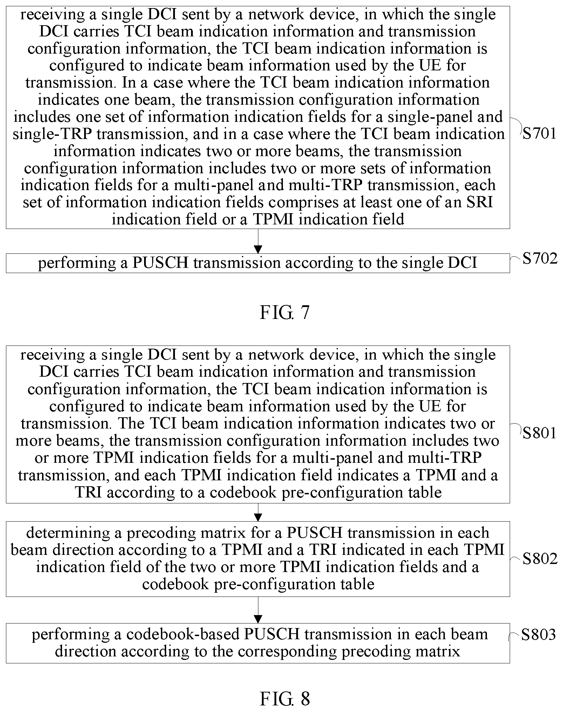

FIG. 7 is a flowchart of a precoding indication method according to an embodiment of the present disclosure. As illustrated in FIG 7, the method is performed by a UE, and the method may include the following steps.

At step S701, a single DCI sent by a network device is received. The single DCI carries TCI beam indication information and transmission configuration information, the TCI beam indication information is configured to indicate beam information used by the UE for transmission. In a case where the TCI beam indication information indicates one beam, the transmission configuration information includes one set of information indication fields for a single-panel and single-TRP transmission, and in a case where the TCI beam indication information indicates two or more beams, the transmission configuration information includes two or more sets of information indication fields for a multi-panel and multi-TRP transmission. Each set of information indication fields includes at least one of a sounding reference signal (SRS) resource indicator (SRI) indication field or a transmit precoding matrix indicator (TPMI) indication field.

In the embodiments of the present disclosure, in addition to including the TCI beam indication information and the transmission configuration information in the single DCI, the transmission configuration information may dynamically include one set of information indication fields or two or more sets of information indication fields according to whether the TCI beam indication information indicates one beam or two or more beams. When the transmission configuration information includes one set of information indication fields, the DCI may be used for the single-panel and single-TRP transmission, and when the transmission configuration information includes two or more sets of information indication fields, the DCI may be used for the multi-panel and multi-TRP transmission. Each set of information indication fields may be at least one of the SRI indication field or the TPMI indication field, but the application is not limited thereto. Each set of information indication fields may also include other information indication fields in addition to the SRI indication field and the TPMI indication field.

In some embodiments, if the TCI beam indication information in the single DCI indicates one beam and the transmission configuration information may include one TPMI indication field, and the TPMI indication field is used to indicate the precoding matrix of a PUSCH transmission in the beam direction, then the single DCI is used for the single-panel and single-TRP transmission, and the single-panel and single-TRP transmission is a codebook-based PUSCH transmission.

In some embodiments, if the TCI beam indication information in the single DCI indicates two or more beams and the transmission configuration information may include two or more TPMI indication fields, and each TPMI indication field is used to indicate the precoding matrix of a PUSCH transmission in a corresponding beam direction, then the single DCI is used for the multi-panel and multi-TRP transmission, and the multi-panel and multi-TRP transmission is a codebook-based PUSCH transmission. For the PUSCH transmission in each beam direction, one TPMI indication field indicates the precoding matrix used in the PUSCH transmission.

In some embodiments, if the TCI beam indication information in the single DCI indicates one beam and the transmission configuration information may include one SRI indication field, and the SRI indication field is used to indicate one or more SRS resources carrying precoding information in an SRS resource set allocated for a PUSCH transmission in the beam direction, then the single DCI is used for the single-panel and single-TRP transmission, and the single-panel and single-TRP transmission is a non-codebook-based PUSCH transmission.

In some embodiments, if the TCI beam indication information in the single DCI indicates two or more beams and the transmission configuration information may include two or more SRI indication fields, and each SRI indication field is used to indicate one or more SRS resources carrying precoding information in an SRS resource set allocated for a PUSCH transmission in a corresponding beam direction, then the single DCI is used for the multi-panel and multi-TRP transmission, and the multi-panel and multi-TRP transmission is a non-codebook-based PUSCH transmission. For the PUSCH transmission in each beam direction, one SRI indication field indicates the one or more SRS resources selected from the SRS resource set allocated for the PUSCH transmission.

At step S702, a PUSCH transmission is performed according to the single DCI.

After receiving the single DCI, the UE performs the PUSCH transmission according to the single DCI.

In some embodiments, when the TCI beam indication information in the single DCI indicates one beam and the transmission configuration information may include one SRI indication field, the UE performs a non-codebook-based single-panel and single-TRP transmission according to the single DCI.

In some embodiments, when the TCI beam indication information in the single DCI indicates two or more beams and the transmission configuration information may include two or more SRI indication fields, the UE performs a non-codebook-based multi-panel and multi-TRP transmission according to the single DCI.

In some embodiments, when the TCI beam indication information in the single DCI indicates one beam and the transmission configuration information may include one TPMI indication field, the UE performs a codebook-based single-panel and single-TRP transmission according to the single DCI.

In some embodiments, when the TCI beam indication information in the single DCI indicates two or more beams and the transmission configuration information may include two or more TPMI indication fields, the UE performs a codebook-based multi-panel and multi-TRP transmission according to the single DCI.

With the precoding indication method provided in this embodiment of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. When the TCI beam indication information indicates one beam, the transmission configuration information includes one set of information indication fields for the single-panel and single-TRP transmission. When the TCI beam indication information indicates two or more beams, the transmission configuration information includes two or more sets of information indication fields for the multi-panel and multi-TRP transmission, and each set of information indication fields includes at least one of an SRI indication field or a TPMI indication field. The information indication field included in the transmission configuration information in the single DCI may be dynamically applied to the single-panel and single-TRP transmission and the multi-panel and multi-TRP transmission, so as to enable switching between single TRP and multi-TRP to make multi-point coordinative transmission more effective, thereby effectively improving reliability and throughput of data transmission.

**FIG** 8 is a flowchart of a precoding indication method according to an embodiment of the present disclosure. As illustrated in FIG 8, the method is performed by a UE, and the method may include the following steps.

At step S801, a single DCI sent by a network device is received. The single DCI carries TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI and a TRI according to a codebook pre-configuration table.

The codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the codebook pre-configuration table.

In some embodiments, if the TCI beam indication information in the single DCI sent by the network device to the UE indicates two or more beams and the transmission configuration information includes two or more TPMI indication fields, then the single DCI is used for the multi-panel and multi-TRP transmission, and the multi-panel and multi-TRP transmission is a codebook-based PUSCH transmission. The codebook-based PUSCH transmission in each beam direction corresponds to one TPMI indication field, that is, one TPMI indication field may indicate a precoding matrix of the codebook-based PUSCH transmission in one beam direction. The network device may determine the codebook parameter configuration and the codebook subset restriction for the PUSCH transmission in each beam direction, so as to determine the codebook pre-configuration table for the PUSCH transmission in each beam direction. Each TPMI indication field included in the transmission configuration information carried in the DCI sent by the network device to the UE may carry an index, and the index is used to indicate both the TPMI and the TRI according to the codebook pre-configuration table. The number of bits occupied by each TPMI indication field is determined according to the number of available TPMI combinations in the corresponding codebook pre-configuration table.

The codebook parameter configuration may be used to configure the number of antenna ports, whether to use transform precoding, and maxRank. The codebook subset restriction includes three types, namely: full and partial and non-coherent; partial and non-coherent; and non-coherent.

For example, for the PUSCH transmission in one beam direction, when the network device determines that the codebook parameter configuration for the PUSCH transmission in the beam direction includes: 4 antenna ports, not using transform precoding, maxRank=2 or 3 or 4 (i.e., for 4 antenna ports, if transform precoder is disabled, maxRank=2 or 3 or 4), and the codebook subset restriction of the PUSCH transmission in the beam direction indicates the partial and non-coherent, the network device may determine that the codebook pre-configuration table for the PUSCH transmission in the beam direction is the table corresponding to the boldface font in Table 1 above. The TPMI indication field used to indicate the precoding matrix for the PUSCH transmission in the beam direction may indicate the TPMI and the TRI according to this table. For example, if the TPMI indication field carries index 1, it indicates TRI=1 and TPMI=1; and if the TPMI indication field carries index 11, it indicates TRI=4 and TPMI=0. In this table, the number of available TPMI combinations is 32, then the number of bits occupied by the TPMI indication field may be determined as $\lceil \log_2 32 \rceil = 5$, where $\lceil \rceil$ indicates rounding up.

For example, for the PUSCH transmission in another beam direction, when the network device determines that the codebook parameter configuration for the PUSCH transmission in the beam direction includes: 4 antenna ports, not using transform precoding, maxRank=2 (i.e., for 4 antenna ports, if transform precoder is disabled, maxRank=2), and the codebook subset restriction of the PUSCH transmission in the beam direction indicates the non-coherent, the network device may determine that the codebook pre-configuration table for the PUSCH transmission in the beam direction is the table corresponding to the boldface font in Table 2 above. The TPMI indication field used to indicate the precoding matrix for the PUSCH transmission in the beam direction may indicate the TPMI and the TRI according to this table. For example, if the TPMI indication field carries index 1, it indicates TRI=1 and TPMI=1; and if the TPMI indication field carries index 11, it indicates TRI=2 and TPMI=6. In this table, the number of available TPMI combinations is 12, then the number of bits occupied by the TPMI indication field may be determined as $\lceil \log_2 12 \rceil = 4$, where $\lceil \ \rceil$ indicates rounding up.

At step S802, a precoding matrix for a PUSCH transmission in each beam direction is determined according to a TPMI and a TRI indicated in each TPMI indication field of the two or more TPMI indication fields and a codebook pre-configuration table.

The UE may determine a codebook parameter configuration and a codebook subset restriction for the PUSCH transmission in each beam direction, and thus determines the codebook pre-configuration table for the PUSCH transmission in each beam direction. After receiving the single DCI, the UE determines the precoding matrix for the PUSCH transmission in each beam direction according to the TPMI and the TRI indicated in each TPMI indication field included in the transmission configuration information carried in the single DCI, and the codebook pre-configuration table.

For example, the TCI beam indication information carried in the DCI sent by the network device and received by the UE indicates two beams, namely a first beam direction and a second beam direction, and the transmission configuration information includes two TPMI indication fields, namely a first TPMI indication field and a second TPMI indication field. The first TPMI indication field carries index 1 and the second TPMI indication field indicates index 11. When the UE determines that the codebook parameter configuration for the PUSCH transmission in the first beam direction includes: 4 antenna ports, not using transform precoding, maxRank=2 or 3 or 4 (i.e., for 4 antenna ports, if transform precoder is disabled, maxRank=2 or 3 or 4), and the codebook subset restriction of the PUSCH transmission in the first beam direction indicates the partial and non-coherent, and the UE determines that the codebook parameter configuration for the PUSCH transmission in the second beam direction includes: 4 antenna ports, not using transform precoding, maxRank=2 (i.e., for 4 antenna ports, if transform precoder is disabled, maxRank=2), and the codebook subset restriction of the PUSCH transmission in the second beam direction indicates the non-coherent, the UE may determine that the codebook pre-configuration table for the PUSCH transmission in the first beam direction is the table corresponding to the boldface font in Table 1 above and the codebook pre-configuration table for the PUSCH transmission in the second beam direction is the table corresponding to the boldface font in Table 2 above. The UE may determine that the precoding matrix for the PUSCH transmission in the first beam direction is the precoding matrix indicated by TRI=1 and TPMI=1 according to the first TPMI indication field carrying index 1 and the codebook pre-configuration table for the PUSCH transmission in the first beam direction, and determine that the precoding matrix for the PUSCH transmission in the second beam direction is the precoding matrix indicated by TRI=2 and TPMI=6 according to the second TPMI indication field carrying index 11 and the codebook pre-configuration table for the PUSCH transmission in the second beam direction.

At step S803, a codebook-based PUSCH transmission is performed in each beam direction according to the corresponding precoding matrix.

After determining the precoding matrix for the PUSCH transmission in each beam direction, the UE performs the codebook-based PUSCH transmission in each beam direction using the corresponding precoding matrix.

With the precoding indication method provided in this embodiment of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more TPMI indication fields, and each TPMI indication field indicates both the TPMI and the TRI. In this way, the single DCI may be applied to the codebook-based multi-panel and multi-TRP transmission, so as to make multi-point coordinative transmission more effective, thereby effectively improving reliability and throughput of data transmission.

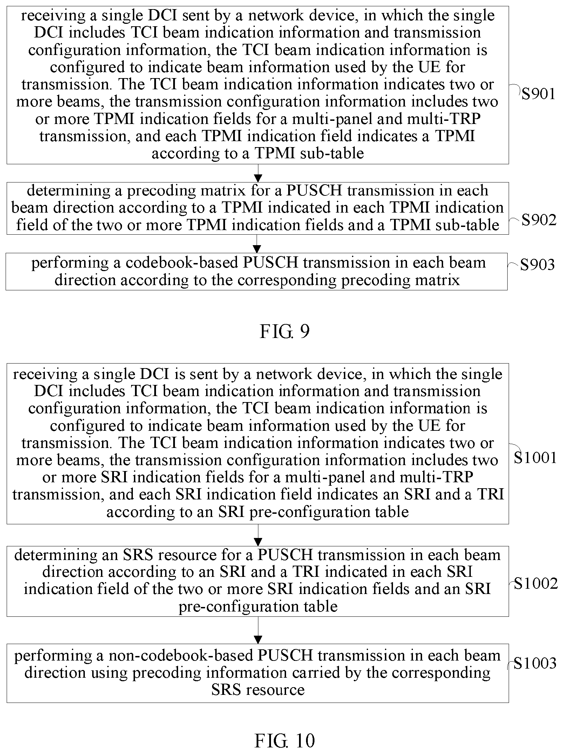

FIG. 9 is a flowchart of a precoding indication method according to an embodiment of the present disclosure. As illustrated in FIG 9, the method is performed by a UE, and the method may include the following steps.

At step S901, a single DCI sent by a network device is received. The single DCI includes TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI according to a TPMI sub-table.

The TPMI sub-table is determined from a codebook pre-configuration table according to a TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction.

In the embodiments, if the TCI beam indication information in the single DCI sent by the network device to the UE indicates two or more beams and the transmission configuration information includes two or more TPMI indication fields, then the single DCI is used for the multi-panel and multi-TRP transmission, and the multi-panel and multi-TRP transmission is a codebook-based PUSCH transmission. The codebook-based PUSCH transmission in each beam direction corresponds to one TPMI indication field, that is, one TPMI indication field may indicate a precoding matrix of the codebook-based PUSCH transmission in one beam direction. The network device may determine the codebook parameter configuration and the codebook subset restriction for the PUSCH transmission in each beam direction and thus determine the codebook pre-configuration table for the PUSCH transmission in each beam direction, and the network device may obtain the TRI used for the PUSCH transmission in each beam direction and thus determine the TPMI sub-table from the determined codebook pre-configuration table. Each TPMI indication field included in the transmission configuration information carried in the DCI sent by the network device to the UE may carry an index, and the index is used to indicate the TPMI according to the TPMI sub-table. The number of bits occupied by each TPMI indication field is determined according to the maximum value of the number of available TPMI combinations corresponding to each available TRI in the corresponding codebook pre-configuration table.

The codebook parameter configuration may be used to configure the number of antenna ports, whether to use transform precoding, and maxRank. The codebook subset restriction includes three types, namely: full and partial and non-coherent; partial and non-coherent; and non-coherent.

**In** an example, for the PUSCH transmission in one beam direction, when the network device determines that the codebook parameter configuration for the PUSCH transmission in the beam direction includes: 4 antenna ports, not using transform precoding, maxRank=2 or 3 or 4 (i.e., for 4 antenna ports, if transform precoder is disabled, maxRank=2 or 3 or 4), and the codebook subset restriction of the PUSCH transmission in the beam direction indicates the partial and non-coherent, the network device may determine that the codebook pre-configuration table for the PUSCH transmission in the beam direction is the table corresponding to the boldface font in Table 1 above. Further, the network device obtains the value of the TRI for the PUSCH transmission in the beam direction, and the network device may determine the corresponding TPMI sub-table as a subset corresponding to the TRI of the value in this table. For example, if TRI=3 is obtained, the network device may determine the corresponding TPMI sub-table as a subset corresponding to TRI=3 (3 layers) in this table, and indexes in the TPMI sub-table are reordered, as shown in Table 3. For another example, if TRI=2 is obtained, the network device may determine the corresponding TPMI sub-table as a subset corresponding to TRI=2 (2 layers) in this table, and indexes in the TPMI sub-table are reordered, as shown in Table 4. The TPMI indication field used to indicate the precoding matrix for the PUSCH transmission in the beam direction may indicate the TPMI according to the TPMI sub-table. For example, in Table 3 determined according to TRI=3, if the TPMI indication field carries index 1, it indicates TPMI =1; and if the TPMI indication field carries index 2, it indicates TPMI=2.

**In** the determined codebook pre-configuration table, the available TRIs include 1, 2, 3 and 4. When TRI=1, the number of available TPMI combinations is 12; when TRI=2, the number of available TPMI combinations is 14; when TRI=3, the number of available TPMI combinations is 3; when TRI=4, the number of available TPMI combinations is 3; then the number of bits occupied by the TPMI indication field may be determined as $\lceil \log_2 14 \rceil = 4$, where $\lceil \rceil$ indicates rounding up.

As shown above, although the available TPMI combinations in the TPMI sub-table determined according to TRI=3 includes three possibilities, i.e., 0, 1 and 2, the number of the codepoints of the TPMI sub-table is determined according to the maximum value of the number of the available TPMI combinations corresponding to each available TRI in the codebook pre-configuration table, i.e., it is determined according to the number 14 of the available TPMI combinations corresponding to TRI=2, so the number of the codepoints of the TPMI sub-table is 16.

In some embodiments, for a specific TRI, the number of codepoints in the TPMI sub-table is 2^M1, in which K1 codepoints respectively represent K1 TPMI values corresponding to the specific TRI in the corresponding codebook pre-configuration table, and remaining (2^M1-K1) codepoints are reserved values, where M1 is $\lceil \log 2(N1_{max}) \rceil$, and $\lceil \rceil$ indicates rounding up.

For example, for TRI=3, 3 codepoints respectively represent the TPMI values corresponding to TRI=3 in the corresponding codebook pre-configuration table, and the remaining 13 chokepoints are reserved, as shown in Table 3 above.

For TRI=2, 14 codepoints respectively represent the TPMI values corresponding to TRI=2 in the corresponding codebook pre-configuration table, and the remaining 2 chokepoints are reserved, as shown in Table 4 above.

At step S902, a precoding matrix for a PUSCH transmission in each beam direction is determined according to a TPMI indicated in each TPMI indication field of the two or more TPMI indication fields and a TPMI sub-table.

The UE may determine a codebook parameter configuration and a codebook subset restriction for the PUSCH transmission in each beam direction, and thus determines the codebook pre-configuration table for the PUSCH transmission in each beam direction. Further, the UE may determine the TPMI sub-table for the PUSCH transmission in each beam direction from the codebook pre-configuration table according to a TRI used for the PUSCH transmission in each beam direction. After receiving the single DCI, the UE determines the precoding matrix for the PUSCH transmission in each beam direction according to the TPMI indicated in each TPMI indication field included in the transmission configuration information carried in the single DCI, and the TPMI sub-table.

For example, the TCI beam indication information carried in the DCI sent by the network device and received by the UE indicates two beams, namely a first beam direction and a second beam direction, and the transmission configuration information includes two TPMI indication fields, namely a first TPMI indication field and a second TPMI indication field. The first TPMI indication field carries index 1 and the second TPMI indication field indicates index 2. When the UE determines that the codebook parameter configuration for the PUSCH transmission in the first beam direction includes: 4 antenna ports, not using transform precoding, maxRank=2 or 3 or 4 (i.e., for 4 antenna ports, if transform precoder is disabled, maxRank=2 or 3 or 4), and the codebook subset restriction of the PUSCH transmission in the first beam direction indicates the partial and non-coherent, and the UE determines that the codebook parameter configuration for the PUSCH transmission in the second beam direction includes: 4 antenna ports, not using transform precoding, maxRank=2 (i.e., for 4 antenna ports, if transform precoder is disabled, maxRank=2), and the codebook subset restriction of the PUSCH transmission in the second beam direction indicates the non-coherent, the UE may determine that the codebook pre-configuration table for the PUSCH transmission in the first beam direction is the table corresponding to the boldface font in Table 1 above and the codebook pre-configuration table for the PUSCH transmission in the second beam direction is the table corresponding to the boldface font in Table 2 above. Further, the UE may determine the TPMI sub-table for the PUSCH transmission in the first beam direction as the above Table 3 from the corresponding codebook pre-configuration table according to the TRI=3 used for the PUSCH transmission in the first beam direction, and determine the TPMI sub-table for the PUSCH transmission in the second beam direction as the above Table 5 from the corresponding codebook pre-configuration table according to the TRI=1 used for the PUSCH transmission in the second beam direction. The UE may determine that the precoding matrix for the PUSCH transmission in the first beam direction is the precoding matrix indicated by TPMI=1 according to the first TPMI indication field carrying index 1 and the codebook pre-configuration table for the PUSCH transmission in the first beam direction, and determine that the precoding matrix for the PUSCH transmission in the second beam direction is the precoding matrix indicated by TPMI=2 according to the second TPMI indication field carrying index 2 and the codebook pre-configuration table for the PUSCH transmission in the second beam direction.

At step S903, a codebook-based PUSCH transmission is performed in each beam direction according to the corresponding precoding matrix.

After determining the precoding matrix for the PUSCH transmission in each beam direction, the UE performs the codebook-based PUSCH transmission in each beam direction using the corresponding precoding matrix.

With the precoding indication method provided in this embodiment of the present disclosure, the network device obtains the TRI used for the PUSCH transmission in each beam direction of the UE, and sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more TPMI indication fields, and each TPMI indication field indicates merely the TPMI. In this way, the single DCI may be applied to the codebook-based multi-panel and multi-TRP transmission, so as to make multi-point coordinative transmission more effective, thereby effectively improving reliability and throughput of data transmission.

FIG 10 is a flowchart of a precoding indication method according to an embodiment of the present disclosure. As illustrated in FIG 10, the method is performed by a UE, and the method may include the following steps.

At step S1001, a single DCI is sent by a network device is received. The single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI and a TRI according to an SRI pre-configuration table.

The SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a number of available SRI combinations in the SRI pre-configuration table.

In some embodiments, if the TCI beam indication information in the single DCI sent by the network device to the UE indicates two or more beams and the transmission configuration information includes two or more SRI indication fields, then the single DCI is used for the multi-panel and multi-TRP transmission, and the multi-panel and multi-TRP transmission is a non-codebook-based PUSCH transmission. The non-codebook-based PUSCH transmission in each beam direction corresponds to one SRI indication field, that is, one SRI indication field may indicate an SRS resource of the non-codebook-based PUSCH transmission in one beam direction. The network device may determine the maximum number of the uplink transmission layers supported by the PUSCH transmission in each beam direction and the number of SRS resources in an SRS resource set allocated for the PUSCH transmission in each beam direction, and thus determine the SRI pre-configuration table for the PUSCH transmission in each beam direction. Each SRI indication field included in the transmission configuration information carried in the DCI sent by the network device to the UE may carry an index, and the index is used to indicate both the SRI and the TRI according to the SRI pre-configuration table. The number of bits occupied by each SRI indication field is determined according to the number of available SRI combinations in the corresponding SRI pre-configuration table.

For example, for the PUSCH transmission associated in one beam direction, when the network device determines that the maximum number of the uplink transmission layers supported by the PUSCH transmission in the beam direction is 4 ($L_{max}$= 4), and the number of SRS resources in an SRS resource set allocated for the PUSCH transmission in the beam direction is 3 ($N_{SRS}$=3), the network device may determine that the SRI pre-configuration table for the PUSCH transmission in the beam direction is the table corresponding to the boldface font in Table 6 above. The SRI indication field used to indicate the SRS resource for the PUSCH transmission in the beam direction may indicate the SRI and the TRI according to this table (implicitly indicated by the number of SRIs). For example, if the SRI indication field carries index 1, it indicates TRI=1 and SRI=1; and if the SRI indication field carries index 6, it indicates TRI=3 and SRI=0, 1, 2. In this table, the number of available SRI combinations is 7, then the number of bits occupied by the SRI indication field may be determined as $\lceil log_2 7 \rceil$=3, where $\lceil \ \rceil$ indicates rounding up.

For example, for the PUSCH transmission in another beam direction, when the network device determines that the maximum number of the uplink transmission layers supported by the PUSCH transmission in the beam direction is 3 ($L_{max}$= 3), and the number of SRS resources in an SRS resource set allocated for the PUSCH transmission in the beam direction is 4 ($N_{SRS}$=4), the network device may determine that the SRI pre-configuration table for the PUSCH transmission in the beam direction is the table corresponding to the boldface font in Table 7 above. The SRI indication field used to indicate the SRS resource for the PUSCH transmission in the beam direction may indicate the SRI and the TRI according to this table. For example, if the SRI indication field carries index 1, it indicates TRI=1 and SRI=1; and if the SRI indication field carries index 6, it indicates TRI=2 and SRI=1, 2. In this table, the number of available SRI combinations is 14, then the number of bits occupied by the SRI indication field may be determined as $\lceil log_2 14 \rceil$=4, where $\lceil \ \rceil$ indicates rounding up.

At step S1002, an SRS resource for a PUSCH transmission in each beam direction is determined according to an SRI and a TRI indicated in each SRI indication field of the two or more SRI indication fields and an SRI pre-configuration table.

The UE may determine a maximum number of uplink transmission layers supported by the PUSCH transmission in each beam direction and a number of SRS resources in an SRS resource set allocated for the PUSCH transmission in each beam direction, and thus determines the SRI pre-configuration table for the PUSCH transmission in each beam direction. After receiving the single DCI, the UE determines the SRS resource for the PUSCH transmission in each beam direction according to the SRI and the TRI indicated in each SRI indication field included in the transmission configuration information carried in the single DCI, and the SRI pre-configuration table.

For example, the TCI beam indication information carried in the DCI sent by the network device and received by the UE indicates two beams, namely a first beam direction and a second beam direction, and the transmission configuration information includes two TPMI indication fields, namely a first SRI indication field and a second SRI indication field. The first SRI indication field carries index 6 and the second SRI indication field indicates index 1. When the UE determines that the maximum number of the uplink transmission layers supported by the PUSCH transmission in the first beam direction is 4 ($L_{max}$= 4), and the number of SRS resources in an SRS resource set allocated for the PUSCH transmission in the first beam direction is 3 ($N_{SRS}$=3), and determines that the maximum number of the uplink transmission layers supported by the PUSCH transmission in the second beam direction is 3 ($L_{max}$=3), and the number of SRS resources in an SRS resource set allocated for the PUSCH transmission in the second beam direction is 4 ($N_{SRS}$=4), the UE may determine that the SRI pre-configuration table for the PUSCH transmission in the first beam direction is the table corresponding to the boldface font in Table 6 above, and the codebook pre-configuration table for the PUSCH transmission in the second beam direction is the table corresponding to the boldface font in Table 7 above. The UE may determine that the SRS resource for the PUSCH transmission in the first beam direction is the SRS resource indicated by TRI=3 and SRI=0,1,2 according to the first SRI indication field carrying index 6 and the SRI pre-configuration table for the PUSCH transmission in the first beam direction, and determine that the SRS resource for the PUSCH transmission in the second beam direction is the SRS resource indicated by TRI=1 and SRI=1 according to the second SRI indication field carrying index 1 and the SRI pre-configuration table for the PUSCH transmission in the second beam direction.

At step S1003, a non-codebook-based PUSCH transmission is performed in each beam direction using precoding information carried by the corresponding SRS resource.

After determining the SRS resource for the PUSCH transmission in each beam direction, the UE performs the non-codebook-based PUSCH transmission in each beam direction using the precoding information carried by the corresponding SRS resource.

**In** some embodiments, an association between the SRI indication fields and the SRS resource sets may be predefined or indicated by an SRS resource set indication field in the single DCI.

Assume that the TCI beam indication information carried in the single DCI sent by the network device indicates three beams (corresponding to a first beam direction, a second beam direction, and a third beam direction respectively), and the transmission configuration information carried in the single DCI includes three SRI indication fields (a first SRI indication field, a second SRI indication field and a third SRI indication field, respectively). In one example, the network device and the UE may predefine that the first SRI indication field indicates selecting an SRS resource from an SRS resource set allocated for the PUSCH transmission in the first beam direction, that is, the first SRI indication field indicates the SRS resource used for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction. In another example, the network device indicates through an SRS resource set indication field in the single DCI. For example, a new SRS resource set indication field is added to the single DCI. The SRS resource set indication field indicates that the first SRI indication field indicates selecting an SRS resource from an SRS resource set allocated for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction.

With the precoding indication method provided in this embodiment of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more SRI indication fields, and each SRI indication field indicates both the SRI and the TRI. In this way, the single DCI may be applied to the codebook-based multi-panel and multi-TRP transmission, so as to make multi-point coordinative transmission more effective, thereby effectively improving reliability and throughput of data transmission.

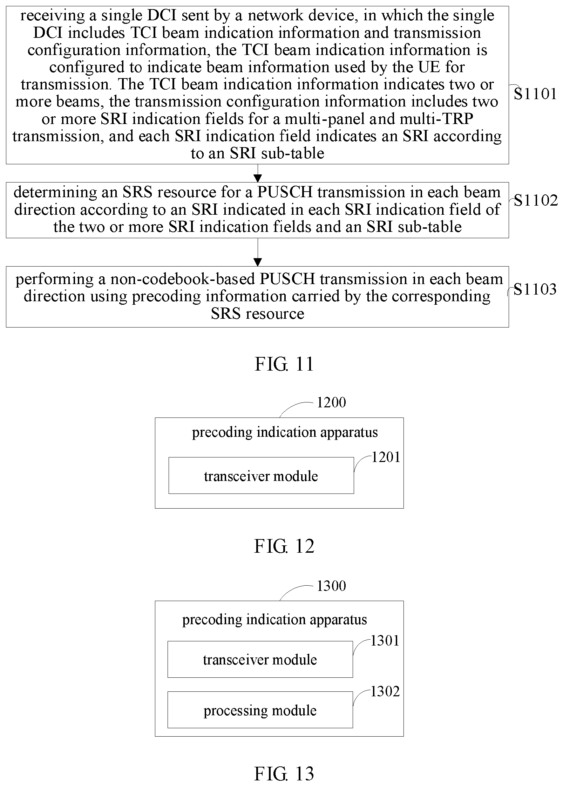

FIG 11 is a flowchart of a precoding indication method according to an embodiment of the present disclosure. As illustrated in FIG 11, the method is performed by a UE, and the method may include the following steps.

At step S1101, a single DCI sent by a network device is received. The single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI according to an SRI sub-table.

The SRI sub-table is determined from a codebook pre-configuration table according to a TRI used for the PUSCH transmission in the corresponding beam direction, and the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a maximum value $N2_{max}$ of a number of available SRI combinations corresponding to each available TRI in the corresponding SRI pre-configuration table, and each available SRI is determined according to a smaller one of the maximum number of the uplink transmission layers supported by the PUSCH transmission in the corresponding beam direction and the number of the SRS resources in the SRS resource set allocated for the PUSCH transmission in the corresponding beam direction.

In the embodiments, if the TCI beam indication information in the single DCI sent by the network device to the UE indicates two or more beams and the transmission configuration information includes two or more SRI indication fields, then the single DCI is used for the multi-panel and multi-TRP transmission, and the multi-panel and multi-TRP transmission is a non-codebook-based PUSCH transmission. The non-codebook-based PUSCH transmission in each beam direction corresponds to one SRI indication field, that is, one SRI indication field may indicate an SRS resource of the non-codebook-based PUSCH transmission in one beam direction. The network device may determine the maximum number of the uplink transmission layers supported by the PUSCH transmission in each beam direction and the number of SRS resources in an SRS resource set allocated for the PUSCH transmission in each beam direction, and thus determine the SRI pre-configuration table for the PUSCH transmission in each beam direction, and the network device may obtain the TRI used for the PUSCH transmission in each beam direction and thus determine the SRI sub-table from the determined SRI pre-configuration table. Each SRI indication field included in the transmission configuration information carried in the DCI sent by the network device to the UE may carry an index, and the index is used to indicate the SRI according to the SRI sub-table. The number of bits occupied by each SRI indication field is determined according to the maximum value of the number of available SRI combinations corresponding to each available TRI in the corresponding SRI pre-configuration table.

In an example, for the PUSCH transmission in one beam direction, when the network device determines that the maximum number of the uplink transmission layers supported by the PUSCH transmission in the beam direction is 4 ($L_{max} = 4$), and the number of SRS resources in an SRS resource set allocated for the PUSCH transmission in the beam direction is 4 ($N_{SRS}$=4), the network device may determine that the SRI pre-configuration table for the PUSCH transmission in the beam direction is the table corresponding to the boldface font in Table 6 above. Further, the network device obtains the value of the TRI for the PUSCH transmission in the beam direction, and the network device may determine the corresponding SRI sub-table as a subset corresponding to the TRI of the value in this table. For example, if TRI=3 is obtained, the network device may determine the corresponding SRI sub-table as a subset corresponding to TRI=3 (3 SRIs) in this table, and indexes in the TPMI sub-table are reordered, as shown in Table 8. For another example, if TRI=2 is obtained, the network device may determine the corresponding SRI sub-table as a subset corresponding to TRI=2 (2 SRIs) in this table, and indexes in the SRI sub-table are reordered, as shown in Table 9. The SRI indication field used to indicate the SRS resource for the PUSCH transmission in the beam direction may indicate the SRI according to the SRI sub-table. For example, in Table 8 determined according to TRI=3, if the SRI indication field carries index 1, it indicates SRI=0, 1, 3; and if the SRI indication field carries index 2, it indicates SRI=0, 2, 3.

In the determined SRI pre-configuration table, the available TRI is greater than or equal to 1 and less than or equal to the smaller one of $L_{max}$ or $N_{SRS}$ (in this example, $L_{max}=N_{SRS}$=4), i.e., 1, 2, 3, 4. When TRI=1, the number of available SRI combinations is 4; when TRI=2, the number of available SRI combinations is 6; when TRI=3, the number of available SRI combinations is 4; when TRI=4, the number of available SRI combinations is 1; then the number of bits occupied by the SRI indication field may be determined as $\lceil \log_2 6 \rceil$=3, where $\lceil \ \rceil$ indicates rounding up.

As shown above, although the available SRI combinations in the SRI sub-table determined according to TRI=3 includes four possibilities, i.e., 0,1,2; 0,1,3; 02,3; and 1,2,3, the number of the codepoints of the SRI sub-table is determined according to the maximum value of the number of the available SRI combinations corresponding to each available TRI in the codebook pre-configuration table, i.e., it is determined according to the number 6 of the available SRI combinations corresponding to TRI=2, so the number of the codepoints of the SRI sub-table is 8.

In some embodiments, for a specific TRI, the number of codepoints in the SRI sub-table is 2^M2, in which K2 codepoints respectively represent K2 SRI values corresponding to the specific TRI in the corresponding SRI pre-configuration table, and remaining (2^M2-K2) codepoints are reserved values, where M2 is $\lceil \log 2(N2_{max}) \rceil$ , and $\lceil \ \rceil$ indicates rounding up.

For example, for TRI=3, 4 codepoint represents the SRI value corresponding to TRI=3 in the corresponding codebook pre-configuration table, and the remaining 4 chokepoints are reserved, as shown in Table 8 above.

For TRI=2, 6 codepoints respectively represent the SRI values corresponding to TRI=2 in the corresponding codebook pre-configuration table, and the remaining 2 chokepoints are reserved, as shown in Table 9 above.

At step S1102, an SRS resource for a PUSCH transmission in each beam direction is determined according to an SRI indicated in each SRI indication field of the two or more SRI indication fields and an SRI sub-table.

The UE may determine a maximum number of uplink transmission layers supported by the PUSCH transmission in each beam direction and a number of SRS resources in an SRS resource set allocated for the PUSCH transmission in each beam direction, and thus determines the SRI pre-configuration table for the PUSCH transmission in each beam direction. Further, the UE may determine the SRI sub-table for the PUSCH transmission in each beam direction from the SRI pre-configuration table according to a TRI used for the PUSCH transmission in each beam direction. After receiving the single DCI, the UE determines the SRS resource for the PUSCH transmission in each beam direction according to the SRI indicated in each SRI indication field included in the transmission configuration information carried in the single DCI, and the SRI sub-table.

In another example, the TCI beam indication information carried in the DCI sent by the network device and received by the UE indicates two beams, namely a first beam direction and a second beam direction, and the transmission configuration information includes two SRI indication fields, namely a first SRI indication field and a second SRI indication field. The first SRI indication field carries index 2 and the second SRI indication field indicates index 5. When the UE determines that the maximum number of the uplink transmission layers supported by the PUSCH transmission in the first beam direction is 4 ($L_{max}$= 4), and the number of SRS resources in an SRS resource set allocated for the PUSCH transmission in the first beam direction is 3 ($N_{SRS}$=3), and determines that the maximum number of the uplink transmission layers supported by the PUSCH transmission in the second beam direction is 3 ($L_{max}$= 3), and the number of SRS resources in an SRS resource set allocated for the PUSCH transmission in the second beam direction is 4 ($N_{SRS}$=4), the UE may determine that the SRI pre-configuration table for the PUSCH transmission in the first beam direction is the table corresponding to the boldface font in Table 6 above, and the codebook pre-configuration table for the PUSCH transmission in the second beam direction is the table corresponding to the boldface font in Table 7 above. Further, the UE may determine the SRI sub-table for the PUSCH transmission in the first beam direction as the above Table 9 from the corresponding codebook pre-configuration table according to the TRI=2 used for the PUSCH transmission in the first beam direction, and determine the SRI sub-table for the PUSCH transmission in the second beam direction as the above Table 11 from the corresponding codebook pre-configuration table according to the TRI=2 used for the PUSCH transmission in the second beam direction. The UE may determine that the SRS resource for the PUSCH transmission in the first beam direction is the SRS resource indicated by SRI=1,2 according to the first SRI indication field carrying index 2 and the SRI pre-configuration table for the PUSCH transmission in the first beam direction, and determine that the SRS resource for the PUSCH transmission in the second beam direction is the SRS resource indicated by SRI=2,3 according to the second SRI indication field carrying index 5 and the SRI pre-configuration table for the PUSCH transmission in the second beam direction.

At step S1103, a non-codebook-based PUSCH transmission is performed in each beam direction using precoding information carried by the corresponding SRS resource.

After determining the SRS resource for the PUSCH transmission in each beam direction, the UE performs the non-codebook-based PUSCH transmission in each beam direction using the precoding information carried by the corresponding SRS resource.

In some embodiments, an association between the SRI indication fields and the SRS resource sets may be predefined or indicated by an SRS resource set indication field in the single DCI.

Assume that the TCI beam indication information carried in the single DCI sent by the network device indicates three beams (corresponding to a first beam direction, a second beam direction, and a third beam direction respectively), and the transmission configuration information carried in the single DCI includes three SRI indication fields (a first SRI indication field, a second SRI indication field and a third SRI indication field, respectively). In one example, the network device and the UE may predefine that the first SRI indication field indicates selecting an SRS resource from an SRS resource set allocated for the PUSCH transmission in the first beam direction, that is, the first SRI indication field indicates the SRS resource used for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction. In another example, the network device indicates through an SRS resource set indication field in the single DCI. For example, a new SRS resource set indication field is added to the single DCI. The SRS resource set indication field indicates that the first SRI indication field indicates selecting an SRS resource from an SRS resource set allocated for the PUSCH transmission in the first beam direction; the second SRI indication field indicates selecting an SRS resource from an SRS resource set allocated for the PUSCH transmission in the second beam direction; and the third SRI indication field indicates selecting an SRS resource from an SRS resource set allocated for the PUSCH transmission in the third beam direction.

With the precoding indication method provided in this embodiment of the present disclosure, the network device obtains the TRI used for the PUSCH transmission in each beam direction of the UE, and sends a single DCI carrying TCI beam indication information and transmission configuration information to the UE. The UE performs the PUSCH transmission according to the single DCI. The TCI beam indication information is used for indicating beam information used by the UE for transmission. The TCI beam indication information indicates two or more beams, the transmission configuration information includes two or more SRI indication fields, and each SRI indication field indicates merely the SRI. In this way, the single DCI may be applied to the codebook-based multi-panel and multi-TRP transmission, so as to make multi-point coordinative transmission more effective, thereby effectively improving reliability and throughput of data transmission.

In the above-described embodiments of the disclosure, the methods provided in the embodiments of the disclosure are described from the perspective of the network device. In order to implement each of the functions in the methods provided by the above embodiments of the disclosure, the network device may include a hardware structure, a software module to implement each of the above functions in the form of a hardware structure, a software module, or a combination of the hardware structure and the software module. A certain function of the above-described functions may be performed in the form of a hardware structure, a software module, or a combination of the hardware structure and the software module.

Corresponding to the methods provided by the embodiments of the present disclosure, the present disclosure further provides a precoding indication apparatus. Since the precoding indication apparatus provided by the embodiments of the present disclosure corresponds to the precoding indication method provided by the above-mentioned embodiments, the implementation of the precoding indication method is also applicable to the precoding indication apparatus provided in the embodiments, and will not be described in detail in the embodiments.

FIG 12 is a block diagram of a precoding indication apparatus 1200 according to an embodiment of the present disclosure. The precoding indication apparatus 1200 may be applied in a network device.

As shown in FIG 12, the apparatus 1200 may include a transceiver module 1201.

The transceiver module 1201 is configured to send a single downlink control information (DCI) to a user equipment (UE), in which the single DCI includincludes transmission configuration indicator (TCI) beam indication information and transmission configuration information, the TCI beam indication information is configured to indicate beam information used by the UE for transmission, in a case where the TCI beam indication information indicates one beam, the transmission configuration information includes a set of information indication fields for a single-panel and single-transmission and reception point (TRP) transmission, and in a case where the TCI beam indication information indicates two or more beams, the transmission configuration information includes two or more sets of information indication fields for a multiple panels (multi-panel) and multiple TRPs (multi-TRP) transmission.

Each set of information indication fields includes at least one of a sounding reference signal (SRS) resource indicator (SRI) indication field or a transmit precoding matrix indicator (TPMI) indication field.

With the precoding indication apparatus provided in the embodiments of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. When the TCI beam indication information indicates one beam, the transmission configuration information includes a set of information indication fields for a single-panel and single-TRP transmission. When the TCI beam indication information indicates two or more beams, the transmission configuration information includes two or more sets of information indication fields for a multi-panel and multi-TRP transmission, and each set of information indication fields includes at least one of an SRI indication field or a TPMI indication field. According to the precoding indication method and apparatus of the embodiments of the present disclosure, a single DCI carries the TCI beam indication information and the transmission configuration information, and the information indication field included in the transmission configuration information in the single DCI may be dynamically applied to the single-panel and single-TRP transmission and the multi-panel and multi-TRP transmission, so as to enable switching between single TRP and multi-TRP to make multi-point coordinative transmission more effective, thereby effectively improving reliability and throughput of data transmission.

In some embodiments, in a case where the transmission configuration information includes two or more TPMI indication fields, the multi-panel and multi-TRP transmission is a codebook-based physical uplink shared channel (PUSCH) transmission, and each TPMI indication field of the two or more TPMI indication fields is configured to indicate a precoding matrix for a PUSCH transmission in an associated beam direction; and in a case where the transmission configuration information includes two or more SRI indication fields, the multi-panel and multi-TRP transmission is a non-codebook-based PUSCH transmission, and each SRI indication field of the two or more SRI indication fields is configured to indicate one or more SRS resources carrying precoding information in an SRS resource set allocated for the PUSCH transmission in the associated beam direction.

In some embodiments, each TPMI indication field of the two or more TPMI indication fields indicates a TPMI and a transmission rank indicator (TRI) according to a codebook pre-configuration table, and the codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the corresponding codebook pre-configuration table.

In some embodiments, the transceiver module 1201 is further configured to obtain rank indication information, in which the rank indication information is configured to indicate a TRI used for a PUSCH transmission in each beam direction of the UE. Each TPMI indication field of the two or more TPMI indication fields indicates a TPMI according to a TPMI sub-table, in which the TPMI sub-table is determined from the codebook pre-configuration table according to the TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction.

In some embodiments, for a specific TRI, a number of codepoints in the TPMI sub-table is 2^M1, in which K1 codepoints respectively represent K1 TPMI values corresponding to the specific TRI in the corresponding codebook pre-configuration table, and remaining (2^M1-K1) codepoints are reserved values, where M1 is $\lceil log2(N1_{max}) \rceil$, and $\lceil \ \rceil$ indicates rounding up.

In some embodiments, each SRI indication field of the two or more SRI indication fields indicates an SRI and a TRI according to an SRI pre-configuration table, in which the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a number of available SRI combinations in the SRI pre-configuration table.

In some embodiments, the transceiver module 1201 is further configured to obtain rank indication information, in which the rank indication information is configured to indicate a TRI used for a PUSCH transmission in each beam direction of the UE. Each SRI indication field of the two or more SRI indication fields indicates an SRI according to an SRI sub-table, the SRI sub-table is determined from an SRI pre-configuration table according to the TRI used by the PUSCH transmission in the corresponding beam direction, the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a maximum value $N2_{max}$ of a number of available SRI combinations corresponding to each available TRI in the corresponding SRI pre-configuration table, each available TRI is each integer greater than or equal to 1 and less than or equal to a first value, and the first value is a smaller one of the maximum number of the uplink transmission layers supported by the PUSCH transmission in the corresponding beam direction and the number of the SRS resources in the SRS resource set allocated for the PUSCH transmission in the corresponding beam direction.

In some embodiments, for a specific TRI, a number of codepoints in the SRI sub-table is 2^M2, in which K2 codepoints respectively represent K2 SRI values corresponding to the specific TRI in the corresponding SRI pre-configuration table, and remaining (2^M2-K2) codepoints are reserved values, where M2 is $\lceil \log_2(N2_{max}) \rceil$, and $\lceil \ \rceil$ indicates rounding up.

In some embodiments, the rank indication information is obtained according to any one of a demodulation reference signal (DMRS) field of the single DCI; a reserved codepoint or an extended codepoint of any indication field in the single DCI; a new added indication field in the single DCI; or a number of codewords supported by the single DCI.

In some embodiments, in a case where the transmission configuration information includes the two or more sets of information indication fields of the multi-panel and multi-TRP transmission, and the multi-panel and multi-TRP transmission is the non-codebook-based PUSCH transmission, an association between SRI indication fields and SRS resource sets is predefined or indicated by an SRS resource set indication field in the single DCI.

FIG 13 is a block diagram of a precoding indication apparatus 1300 according to an embodiment of the present disclosure. The precoding indication apparatus 1300 may be applied in a UE.

As shown in FIG 13, the apparatus 1300 may include a transceiver module 1301 and a processing module 1302.

The transceiver module 1301 is configured to receive a single DCI carrying TCI beam indication information and transmission configuration information sent by a network device, in which the TCI beam indication information is configured to indicate beam information used by the UE for transmission, in a case where the TCI beam indication information indicates one beam, the transmission configuration information includes a set of information indication fields for a single-panel and single-TRP transmission, and in a case where the TCI beam indication information indicates two or more beams, the transmission configuration information includes two or more sets of information indication fields for a multi-panel and multi-TRP transmission, each set of information indication fields includes at least one of an SRI indication field or a TPMI indication field.

The processing module 1302 is configured to perform a PUSCH transmission according to the single DCI.

With the precoding indication apparatus provided in the embodiments of the present disclosure, the network device sends a single DCI carrying TCI beam indication information and transmission configuration information to the UE. The UE performs the PUSCH transmission according to the single DCI. The TCI beam indication information is used for indicating beam information used by the UE for transmission. When the TCI beam indication information indicates one beam, the transmission configuration information includes a set of information indication fields for a single-panel and single-TRP transmission. When the TCI beam indication information indicates two or more beams, the transmission configuration information includes two or more sets of information indication fields for a multi-panel and multi-TRP transmission, and each set of information indication fields includes at least one of an SRI indication field or a TPMI indication field. According to the precoding indication method and apparatus of the embodiments of the present disclosure, a single DCI carries the TCI beam indication information and the transmission configuration information, and the information indication field included in the transmission configuration information in the single DCI may be dynamically applied to the single-panel and single-TRP transmission and the multi-panel and multi-TRP transmission, so as to enable switching between single TRP and multi-TRP to make multi-point coordinative transmission more effective, thereby effectively improving reliability and throughput of data transmission.

In some embodiments, in a case where the transmission configuration information includes two or more TPMI indication fields, the multi-panel and multi-TRP transmission is a codebook-based PUSCH transmission, and each TPMI indication field of the two or more TPMI indication fields is configured to indicate a precoding matrix for a PUSCH transmission in an associated beam direction; and in a case where the TCI beam indication information indicates two or more beams and the transmission configuration information includes two or more SRI indication fields, the multi-panel and multi-TRP transmission is a non-codebook-based PUSCH transmission, and each SRI indication field of the two or more SRI indication fields is configured to indicate one or more SRS resources carrying precoding information in an SRS resource set allocated for the PUSCH transmission in the associated beam direction.

In some embodiments, in a case where the multi-panel and multi-TRP transmission is the codebook-based PUSCH transmission, and the processing module 1302 is configured to perform: determine a precoding matrix for a PUSCH transmission in each beam direction according to a TPMI and a TRI indicated by each TPMI indication field of the two or more TPMI indication fields and a codebook pre-configuration table, in which the codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the corresponding codebook pre-configuration table; and perform the codebook-based PUSCH transmission according to the corresponding precoding matrix in each beam direction.

**In** some embodiments, in a case where the multi-panel and multi-TRP transmission is the codebook-based PUSCH transmission, and the processing module 1302 is configured to perform: determine a precoding matrix for a PUSCH transmission in each beam direction according to a TPMI indicated by each TPMI indication field of the two or more TPMI indication fields and a TPMI sub-table, in which the TPMI sub-table is determined from the codebook pre-configuration table according to the TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction; and perform the codebook-based PUSCH transmission according to the corresponding precoding matrix (TPMI) in each beam direction.

In some embodiments, for a specific TRI, a number of codepoints in the TPMI sub-table is 2^M1, in which K1 codepoints respectively represent K1 TPMI values corresponding to the specific TRI in the corresponding codebook pre-configuration table, and remaining (2^M1-K1) codepoints are reserved values, where M1 is $\lceil \log2(N1_{max}) \rceil$, and $\lceil \ \rceil$ indicates rounding up.

**In** some embodiments, in a case where the multi-panel and multi-TRP transmission is the non-codebook-based PUSCH transmission, and the processing module 1302 is configured to perform: determine an SRS resource for a PUSCH transmission in each beam direction according to an SRI and a TRI indicated by each SRI indication field of the two or more SRI indication fields and an SRI pre-configuration table, in which the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a number of available SRI combinations in the SRI pre-configuration table; and perform the non-codebook-based PUSCH transmission using precoding information carried by the corresponding SRS resource in each beam direction.

**In** some embodiments, in a case where the multi-panel and multi-TRP transmission is the non-codebook-based PUSCH transmission, and the processing module 1302 is configured to perform: determine an SRS resource for a PUSCH transmission in each beam direction according to an SRI indicated by each SRI indication field of the two or more SRI indication fields and an SRI sub-table, in which the SRI sub-table is determined from an SRI pre-configuration table according to the TRI used by the PUSCH transmission in the corresponding beam direction, the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a maximum value $N_{max}$ of a number of available SRI combinations corresponding to each available TRI in the corresponding SRI pre-configuration table, each available TRI is each integer greater than or equal to 1 and less than or equal to a first value, and the first value is a smaller one of the maximum number of the uplink transmission layers supported by the PUSCH transmission in the corresponding beam direction and the number of the SRS resources in the SRS resource set allocated for the PUSCH transmission in the corresponding beam direction; and perform the non-codebook-based PUSCH transmission using precoding information carried by the corresponding SRS resource in each beam direction.

**In** some embodiments, for a specific TRI, a number of codepoints in the SRI sub-table is 2^M2, in which K2 codepoints respectively represent K2 SRI values corresponding to the specific TRI in the corresponding SRI pre-configuration table, and remaining (2^M2-K2) codepoints are reserved values, where M2 is $\lceil \log_2(N2_{max}) \rceil$, and $\lceil \ \rceil$ indicates rounding up.

**In** some embodiments, in a case where the transmission configuration information includes the two or more sets of information indication fields of the multi-panel and multi-TRP transmission, and the multi-panel and multi-TRP transmission is the non-codebook-based PUSCH transmission, an association between SRI indication fields and SRS resource sets is predefined or indicated by an SRS resource set indication field in the single DCI.

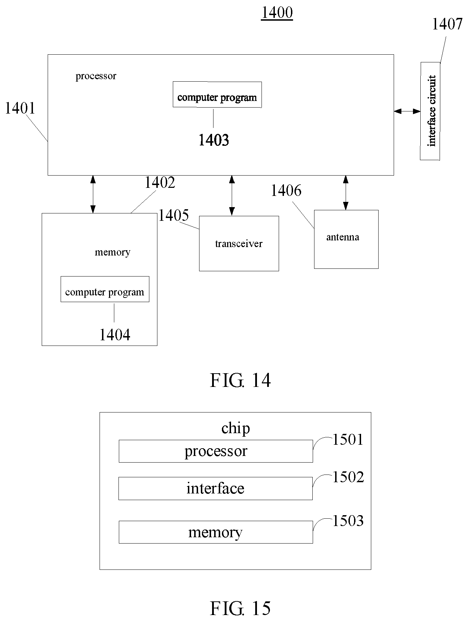

FIG 14 is a block diagram of a communication apparatus 1400 according to an embodiment of the present disclosure. The communication apparatus 1400 may be a network device, a UE (such as the UE in the above method embodiments), a chip, a chip system, a processor, etc. that supports the network device to implement the method, or a chip, a chip system, a processor, etc. that supports the UE to implement the method. The apparatus may be used to implement the method in the above method embodiments. For details, please refer to the above method embodiments.

The communication apparatus 1400 may include one or more processors 1401. The processor 1401 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 1400 may also include one or more memories 1402 for storing the computer program 1404. The processor 1401 executes the computer program 1404, to cause the communication apparatus 1400 to implement the method in the above method embodiments. Optionally, the memory 1402 may also store data. The communication apparatus 1400 and the memory 1402 may be set up separately or integrated together.

Optionally, the communication apparatus 1400 may also include a transceiver 1405 and an antenna 1406. The transceiver 1405 may be called a transceiver unit, a transceiver machine, or a transceiver circuit, etc., to implement the receiving and sending function. The transceiver 1405 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 1400 may also include one or more interface circuits 1407. The interface circuit 1407 is used to receive code instructions and transmit the code instructions to the processor 1401. The processor 1401 runs the code instructions to cause the communication apparatus 1400 to implement the method in the above method embodiment.

**In** one implementation, the processor 1401 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 1401 may store a computer program 1403. When the computer program 1403 is running on the processor 1401, the communication apparatus 1400 is caused to implement the method in the above method embodiments. The computer program 1403 may be solidified in the processor 1401, in which case the processor 1401 may be implemented in hardware.

In an implementation, the communication apparatus 1400 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a UE, but the scope of the communication apparatus in the disclosure is not limited to this, and the structure of the communication apparatus may not be restricted by FIG 14. The communication apparatus may be an independent device or part of a larger device. For example, the communication apparatus may be:

(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
**(5)** a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG 15. The chip shown in FIG 15 includes a processor 1501 and an interface 1502. There may be one or more processors 1501, and there may be one or more interfaces 1502.

Optionally, the chip also includes a memory 1503, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

**In** the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

As used herein, the terms "machine-readable medium" and "computer-readable medium" refer to any computer program product, device, and/or apparatus for providing machine instructions and/or data to a programmable processor (for example, magnetic disks, optical disks, memories, programmable logic devices (PLD)), including machine-readable media that receive machine instructions as machine-readable signals. The term "machine-readable signal" refers to any signal used to provide machine instructions and/or data to a programmable processor.

The systems and techniques described herein may be implemented in a computing system that includes back-end components (e.g., as a data server), or a computing system that includes middleware components (e.g., an application server), or a computing system that includes front-end components (e.g., a user's computer having a graphical user interface or web browser through which the user can interact with implementations of the systems and technologies described herein), or a computing system including any combination of such backend components, middleware components, or front-end components. The components of the system may be interconnected by any form or medium of digital data communication (e.g., a communications network). Examples of communication networks include: local area network (LAN), wide area network (WAN), and the Internet.

Computer systems may include clients and servers. Clients and servers are generally remote from each other and typically interact over a communications network. The relationship of client and server is created by computer programs running on corresponding computers and having a client-server relationship with each other.

It should be understood that various forms of the process shown above may be used, with steps reordered, added or deleted. For example, each step described in the present disclosure can be executed in parallel, sequentially, or in a different order, as long as the desired results of the technical solutions disclosed in the present disclosure can be achieved, there is no limitation here.

In addition, it should be understood that the various embodiments described in this application can be implemented alone or in combination with other embodiments if the solution allows.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

**Claims**

1. A precoding indication method, performed by a network device, comprising:

    sending a single downlink control information (DCI) to a user equipment (UE), wherein the single DCI comprises transmission configuration indicator (TCI) beam indication information and transmission configuration information, the TCI beam indication information is configured to indicate beam information used by the UE for transmission, wherein in a case where the TCI beam indication information indicates one beam, the transmission configuration information comprises a set of information indication fields for a single-panel and single-transmission and reception point (TRP) transmission, and in a case where the TCI beam indication information indicates two or more beams, the transmission configuration information comprises two or more sets of information indication fields for a multiple panels (multi-panel) and multiple TRPs (multi-TRP) transmission;
    wherein each set of information indication fields comprises at least one of a sounding reference signal (SRS) resource indicator (SRI) indication field or a transmit precoding matrix indicator (TPMI) indication field.

2. The method of claim 1, wherein

    in a case where the transmission configuration information comprises two or more TPMI indication fields, the multi-panel and multi-TRP transmission is a codebook-based physical uplink shared channel (PUSCH) transmission, and each TPMI indication field of the two or more TPMI indication fields is configured to indicate a precoding matrix for a PUSCH transmission in an associated beam direction; and
    in a case where the transmission configuration information comprises two or more SRI indication fields, the multi-panel and multi-TRP transmission is a non-codebook-based PUSCH transmission, and each SRI indication field of the two or more SRI indication fields is configured to indicate one or more SRS resources carrying precoding information in an SRS resource set allocated for the PUSCH transmission in the associated beam direction.

3. The method of claim 2, wherein each TPMI indication field of the two or more TPMI indication fields indicates a TPMI and a transmission rank indicator (TRI) according to a codebook pre-configuration table, and the codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the corresponding codebook pre-configuration table.

4. The method of claim 2, further comprising:

    obtaining rank indication information, wherein the rank indication information is configured to indicate a TRI used for a PUSCH transmission in each beam direction of the UE; and
    wherein, each TPMI indication field of the two or more TPMI indication fields indicates a TPMI according to a TPMI sub-table, wherein the TPMI sub-table is determined from a codebook pre-configuration table according to the TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction.

5. The method of claim 4, wherein for a specific TRI, a number of codepoints in the TPMI sub-table is 2^M1, wherein K1 codepoints respectively represent K1 TPMI values corresponding to the specific TRI in the corresponding codebook pre-configuration table, and remaining (2^M1-K1) codepoints are reserved values, where M1 is $\lceil \log_2(N1_{max}) \rceil$, and $\lceil \rceil$ indicates rounding up.

6. The method of claim 2, wherein each SRI indication field of the two or more SRI indication fields indicates an SRI and a TRI according to an SRI pre-configuration table, wherein the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a number of available SRI combinations in the SRI pre-configuration table.

7. The method of claim 2, further comprising:

obtaining rank indication information, wherein the rank indication information is configured to indicate a TRI used for a PUSCH transmission in each beam direction of the UE; and
wherein, each SRI indication field of the two or more SRI indication fields indicates an SRI according to an SRI sub-table, the SRI sub-table is determined from an SRI pre-configuration table according to the TRI used by the PUSCH transmission in the corresponding beam direction, the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a maximum value $N2_{max}$ of a number of available SRI combinations corresponding to each available TRI in the corresponding SRI pre-configuration table, each available TRI is each integer greater than or equal to 1 and less than or equal to a first value, and the first value is the smaller one of the maximum number of the uplink transmission layers supported by the PUSCH transmission in the corresponding beam direction and the number of the SRS resources in the SRS resource set allocated for the PzUSCH transmission in the corresponding beam direction.

8. The method of claim 7, wherein for a specific TRI, a number of codepoints in the SRI sub-table is 2^M2, wherein K2 codepoints respectively represent K2 SRI values corresponding to the specific TRI in the corresponding SRI pre-configuration table, and remaining (2^M2-K2) codepoints are reserved values, where M2 is $\lceil \log_2(N2_{max}) \rceil$, and $\lceil \rceil$ indicates rounding up.

9. The method of claim 7, wherein the rank indication information is obtained according to any one of:

a demodulation reference signal (DMRS) field of the single DCI;
a reserved codepoint or an extended codepoint of any indication field in the single DCI;
a new added indication field in the single DCI; or
a number of codewords supported by the single DCI.

10. The method of any of claims 1-9, wherein in a case where the transmission configuration information comprises the two or more sets of information indication fields of the multi-panel and multi-TRP transmission, and the multi-panel and multi-TRP transmission is the non-codebook-based PUSCH transmission, an association between SRI indication fields and SRS resource sets is predefined or indicated by an SRS resource set indication field in the single DCI.

11. A precoding indication method, performed by a user equipment (UE), comprising:

receiving a single downlink control information (DCI) carrying transmission configuration indicator (TCI) beam indication information and transmission configuration information sent by a network device, wherein the TCI beam indication information is configured to indicate beam information used by the UE for transmission, wherein in a case where the TCI beam indication information indicates one beam, the transmission configuration information comprises a set of information indication fields for a single-panel and single-transmission and reception point (TRP) transmission, and in a case where the TCI beam indication information indicates two or more beams, the transmission configuration information comprises two or more sets of information indication fields for a multiple panels (multi-panel) and multiple TRPs (multi-TRP) transmission, wherein each set of information indication fields comprises at least one of a sounding reference signal (SRS) resource indicator (SRI) indication field or a transmit precoding matrix indicator (TPMI) indication field; and

performing a physical uplink shared channel (PUSCH) transmission according to the single DCI.

12. The method of claim 11, wherein

in a case where the transmission configuration information comprises two or more TPMI indication fields, the multi-panel and multi-TRP transmission is a codebook-based PUSCH transmission, and each TPMI indication field of the two or more TPMI indication fields is configured to indicate a precoding matrix for a PUSCH transmission in an associated beam direction; and

in a case where the TCI beam indication information indicates two or more beams and the transmission configuration information comprises two or more SRI indication fields, the multi-panel and multi-TRP transmission is a non-codebook-based PUSCH transmission, and each SRI indication field of the two or more SRI indication fields is configured to indicate one or more SRS resources carrying precoding information in an SRS resource set allocated for the PUSCH transmission in the associated beam direction.

13. The method of claim 12, wherein in a case where the multi-panel and multi-TRP transmission is the codebook-based PUSCH transmission, and performing the PUSCH transmission according to the single DCI comprises:

determining a precoding matrix for a PUSCH transmission in each beam direction according to a TPMI and a transmission rank indicator (TRI) indicated by each TPMI indication field of the two or more TPMI indication fields and a codebook pre-configuration table, wherein the codebook pre-configuration table is determined according to a codebook parameter configuration of the PUSCH transmission in the corresponding beam direction and a codebook subset restriction of the PUSCH transmission in the corresponding beam direction, and a number of bits occupied by each TPMI indication field is determined according to a number of available TPMI combinations in the corresponding codebook pre-configuration table; and

performing the codebook-based PUSCH transmission according to the corresponding precoding matrix in each beam direction.

14. The method of claim 12, wherein in a case where the multi-panel and multi-TRP transmission is the codebook-based PUSCH transmission, and performing the PUSCH transmission according to the single DCI comprises:

determining a precoding matrix for a PUSCH transmission in each beam direction according to a TPMI indicated by each TPMI indication field of the two or more TPMI indication fields and a TPMI sub-table, wherein the TPMI sub-table is determined from a codebook pre-configuration table according to the TRI used for the PUSCH transmission in the corresponding beam direction, and the codebook pre-configuration table is determined according to a codebook parameter configuration of the PUSCH transmission in the corresponding beam direction and a codebook subset restriction of the PUSCH transmission in the corresponding beam direction, a number of bits occupied by each TPMI indication field is determined according to a maximum value $N1_{max}$ of a number of available TPMI combinations corresponding to each available TRI in the corresponding codebook pre-configuration table, and each available TRI is determined according to the codebook parameter configuration of the PUSCH transmission in the corresponding beam direction and the codebook subset restriction of the PUSCH transmission in the corresponding beam direction; and

performing the codebook-based PUSCH transmission according to the corresponding precoding matrix in each beam direction.

15. The method of claim 14, wherein for a specific TRI, a number of codepoints in the TPMI sub-table is 2^M1, wherein K1 codepoints respectively represent K1 TPMI values corresponding to the specific TRI in the corresponding codebook pre-configuration table, and remaining (2^M1-K1) codepoints are reserved values, where M1 is ⌈log$_2$(N1$_{max}$)⌉, and ⌈ ⌉ indicates rounding up.

16. The method of claim 12, wherein in a case where the multi-panel and multi-TRP transmission is the non-codebook-based PUSCH transmission, and performing the PUSCH transmission according to the single DCI comprises:

determining an SRS resource for a PUSCH transmission in each beam direction according to an SRI and a TRI indicated by each SRI indication field of the two or more SRI indication fields and an SRI pre-configuration table, wherein the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, a number of bits occupied by each SRI indication field is determined according to a number of available SRI combinations in the SRI pre-configuration table; and
performing the non-codebook-based PUSCH transmission using precoding information carried by the corresponding SRS resource in each beam direction.

17. The method of claim 12, wherein in a case where the multi-panel and multi-TRP transmission is the non-codebook-based PUSCH transmission, and performing the PUSCH transmission according to the single DCI comprises:

determining an SRS resource for a PUSCH transmission in each beam direction according to an SRI indicated by each SRI indication field of the two or more SRI indication fields and an SRI sub-table, wherein the SRI sub-table is determined from an SRI pre-configuration table according to the TRI used by the PUSCH transmission in the corresponding beam direction, the SRI pre-configuration table is determined according to a maximum number of uplink transmission layers supported by the PUSCH transmission in the corresponding beam direction and a number of SRS resources in an SRS resource set allocated for the PUSCH transmission in the corresponding beam direction, and a number of bits occupied by each SRI indication field is determined according to a maximum value $N_{max}$ of a number of available SRI combinations corresponding to each available TRI in the corresponding SRI pre-configuration table, each available TRI is each integer greater than or equal to 1 and less than or equal to a first value, and the first value is the smaller one of the maximum number of the uplink transmission layers supported by the PUSCH transmission in the corresponding beam direction and the number of the SRS resources in the SRS resource set allocated for the PUSCH transmission in the corresponding beam direction; and
performing the non-codebook-based PUSCH transmission using precoding information carried by the corresponding SRS resource in each beam direction.

18. The method of claim 17, wherein for a specific TRI, a number of codepoints in the SRI sub-table is 2^M2, wherein K2 codepoints respectively represent K2 SRI values corresponding to the specific TRI in the corresponding SRI pre-configuration table, and remaining (2^M2-K2) codepoints are reserved values, where M2 is $\lceil \log_2(N2_{max}) \rceil$, and $\lceil \ \rceil$ indicates rounding up.

19. A precoding indication apparatus, configured in a network device, comprising:

a transceiver module, configured to send a single downlink control information (DCI) to a user equipment (UE), wherein the single DCI comprises transmission configuration indicator (TCI) beam indication information and transmission configuration information, the TCI beam indication information is configured to indicate beam information used by the UE for transmission, in a case where the TCI beam indication information indicates one beam, the transmission configuration information comprises a set of information indication fields for a single-panel and single-transmission and reception point (TRP) transmission, and in a case where the TCI beam indication information indicates two or more beams, the transmission configuration information comprises two or more sets of information indication fields for a multiple panels (multi-panel) and multiple TRPs (multi-TRP) transmission;
wherein each set of information indication fields comprises at least one of a sounding reference signal (SRS) resource indicator (SRI) indication field or a transmit precoding matrix indicator (TPMI) indication field.

20. A precoding indication apparatus, configured in a user equipment (UE), comprising:

a transceiver module, configured to receive a single downlink control information (DCI) carrying transmission configuration indicator (TCI) beam indication information and transmission configuration information sent by a network device, the TCI beam indication information is configured to indicate beam information used by the UE for transmission, in a case where the TCI beam indication information indicates one beam, the transmission configuration information comprises a set of information indication fields for a single-panel and single-transmission and reception point (TRP) transmission, and in a case where the TCI beam indication information indicates two or more beams, the transmission configuration information comprises two or more sets of information indication fields for a multiple panels (multi-panel) and multiple TRPs (multi-TRP) transmission, wherein each set of information indication fields comprises at least one of a sounding reference signal (SRS) resource indicator (SRI) indication field or a transmit precoding matrix indicator (TPMI) indication field; and
a processing module, configured to perform a physical uplink shared channel (PUSCH) transmission according to the single DCI.

21. A communication device, comprising: a transceiver, a memory, and a processor connected to the transceiver and the memory, respectively, wherein the processor is configured to control the transceiver to receive and transmit signals and to perform the method of any one of claims 1 to 18 by executing computer-executable instructions on the memory.

22. A computer storage medium for storing computer-executable instructions, wherein when the computer-executable instructions are executed by a computer, the method of any one of claims 1 to 18 is implemented.

FIG. 1

| sending a single DCI to a UE, in which the single DCI includes TCI beam indication information and transmission configuration information, the TCI beam indication information is configured to indicate beam information used by the UE for transmission. In a case where the TCI beam indication information indicates one beam, the transmission configuration information includes one set of information indication fields for a single-panel and single-TRP transmission, and in a case where the TCI beam indication information indicates two or more beams, the transmission configuration information includes two or more sets of information indication fields for a multi-panel and multi-TRP transmission, each set of information indication fields comprises at least one of an SRI indication field or a TPMI indication field |
|---|

S201

FIG. 2

| sending a single DCI to a UE, in which the single DCI includes TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI and a TRI according to a codebook pre-configuration table |
|---|

S301

FIG. 3

| |
|---|
| obtaining rank indication information, in which the rank indication information is configured to indicate a TRI used for a PUSCH transmission in each beam direction of the UE |

S401

| |
|---|
| sending a single DCI to a UE, in which the single DCI includes TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI according to a TPMI sub-table |

S402

FIG. 4

| |
|---|
| sending a single DCI to a UE, in which the single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI and a TRI according to an SRI pre-configuration table |

S501

FIG. 5

| |
|---|
| obtaining rank indication information, in which the rank indication information is configured to indicate a TRI used for a PUSCH transmission in each beam direction of the UE |

S601

| |
|---|
| sending a single DCI to a UE, in which the single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI according to an SRI sub-table |

S602

FIG. 6

receiving a single DCI sent by a network device, in which the single DCI carries TCI beam indication information and transmission configuration information, the TCI beam indication information is configured to indicate beam information used by the UE for transmission. In a case where the TCI beam indication information indicates one beam, the transmission configuration information includes one set of information indication fields for a single-panel and single-TRP transmission, and in a case where the TCI beam indication information indicates two or more beams, the transmission configuration information includes two or more sets of information indication fields for a multi-panel and multi-TRP transmission, each set of information indication fields comprises at least one of an SRI indication field or a TPMI indication field ⟩S701

performing a PUSCH transmission according to the single DCI ⟩S702

FIG. 7

receiving a single DCI sent by a network device, in which the single DCI carries TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI and a TRI according to a codebook pre-configuration table ⟩S801

determining a precoding matrix for a PUSCH transmission in each beam direction according to a TPMI and a TRI indicated in each TPMI indication field of the two or more TPMI indication fields and a codebook pre-configuration table ⟩S802

performing a codebook-based PUSCH transmission in each beam direction according to the corresponding precoding matrix ⟩S803

FIG. 8

receiving a single DCI sent by a network device, in which the single DCI includes TCI beam indication information and transmission configuration information, the TCI beam indication information is configured to indicate beam information used by the UE for transmission. The TCI beam indication information indicates two or more beams, the transmission configuration information includes two or more TPMI indication fields for a multi-panel and multi-TRP transmission, and each TPMI indication field indicates a TPMI according to a TPMI sub-table    S901

determining a precoding matrix for a PUSCH transmission in each beam direction according to a TPMI indicated in each TPMI indication field of the two or more TPMI indication fields and a TPMI sub-table    S902

performing a codebook-based PUSCH transmission in each beam direction according to the corresponding precoding matrix    S903

FIG. 9

receiving a single DCI is sent by a network device, in which the single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI and a TRI according to an SRI pre-configuration table    S1001

determining an SRS resource for a PUSCH transmission in each beam direction according to an SRI and a TRI indicated in each SRI indication field of the two or more SRI indication fields and an SRI pre-configuration table    S1002

performing a non-codebook-based PUSCH transmission in each beam direction using precoding information carried by the corresponding SRS resource    S1003

FIG. 10

receiving a single DCI sent by a network device, in which the single DCI includes TCI beam indication information and transmission configuration information, the TCI beam indication information is configured to indicate beam information used by the UE for transmission. The TCI beam indication information indicates two or more beams, the transmission configuration information includes two or more SRI indication fields for a multi-panel and multi-TRP transmission, and each SRI indication field indicates an SRI according to an SRI sub-table

S1101

determining an SRS resource for a PUSCH transmission in each beam direction according to an SRI indicated in each SRI indication field of the two or more SRI indication fields and an SRI sub-table

S1102

performing a non-codebook-based PUSCH transmission in each beam direction using precoding information carried by the corresponding SRS resource

S1103

FIG. 11

1200

precoding indication apparatus

transceiver module 1201

FIG. 12

1300

precoding indication apparatus

transceiver module 1301

processing module 1302

FIG. 13

<u>1400</u>

1407

processor

computer program

1403

1401

1402

1405

1406

memory

computer program

1404

transceiver

antenna

interface circuit

FIG. 14

chip

processor — 1501

interface — 1502

memory — 1503

FIG. 15

## INTERNATIONAL SEARCH REPORT

| International application No. |
| --- |
| **PCT/CN2022/111584** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 下行控制信息, 传输配置, 指示, 波束, 波束组, 天线面板, 接收点, 单个, 组合, 探测参考信号, 预编码, 码本, 关联, panel, DCI, TCI, PDCCH, SRS, SRI, TPMI, codepoint, measure, collocate, beam, group, one, multi+, book, index

**C. DOCUMENTS CONSIDERED TO BE RELEVANT**

| Category* | Citation of document, with indication, where appropriate, of the relevant passages | Relevant to claim No. |
| --- | --- | --- |
| X | CN 113271671 A (DATANG MOBILE COMMUNICATIONS EQUIPMENT CO., LTD.) 17 August 2021 (2021-08-17)<br>description, paragraphs [0004]-[0301] | 1-3, 6, 10-13, 16, 19-22 |
| X | WO 2022082372 A1 (BEIJING XIAOMI MOBILE SOFTWARE CO., LTD.) 28 April 2022 (2022-04-28)<br>description, paragraphs [04]-[0258] | 1, 11, 19-22 |
| X | WO 2022082373 A1 (BEIJING XIAOMI MOBILE SOFTWARE CO., LTD.) 28 April 2022 (2022-04-28)<br>description, paragraphs [04]-[0239] | 1, 11, 19-22 |
| A | CN 113259952 A (VIVO COMMUNICATION TECHNOLOGY CO., LTD.) 13 August 2021 (2021-08-13)<br>entire document | 1-22 |
| A | US 2022030576 A1 (QUALCOMM INC.) 27 January 2022 (2022-01-27)<br>entire document | 1-22 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 December 2022** | **14 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/111584**

| Patent document cited in search report | | | Publication date (day/month/year) | Patent family member(s) | | | Publication date (day/month/year) |
|---|---|---|---|---|---|---|---|
| CN | 113271671 | A | 17 August 2021 | None | | | |
| WO | 2022082372 | A1 | 28 April 2022 | None | | | |
| WO | 2022082373 | A1 | 28 April 2022 | None | | | |
| CN | 113259952 | A | 13 August 2021 | None | | | |
| US | 2022030576 | A1 | 27 January 2022 | WO | 2022020001 | A1 | 27 January 2022 |

Form PCT/ISA/210 (patent family annex) (January 2015)